(19) Europäisches Patentamt
European Patent Office
Office européen des brevets

(11) Veröffentlichungsnummer: **0 260 685 B1**

(12) # EUROPÄISCHE PATENTSCHRIFT

(45) Veröffentlichungstag der Patentschrift: **04.09.91**

(51) Int. Cl.5: **C08J 9/00**, C08K 5/09, C08K 5/16, B29C 33/60

(21) Anmeldenummer: **87113590.1**

(22) Anmeldetag: **17.09.87**

Die Akte enthält technische Angaben, die nach dem Eingang der Anmeldung eingereicht wurden und die nicht in dieser Patentschrift enthalten sind.

(54) **Innere Formtrennmittel, deren Verwendung zur Herstellung von Formkörpern nach dem Polyisocyanat-polyadditionsverfahren und Verfahren zur Herstellung der Formkörper.**

(30) Priorität: **19.09.86 DE 3631842**

(43) Veröffentlichungstag der Anmeldung:
**23.03.88 Patentblatt 88/12**

(45) Bekanntmachung des Hinweises auf die Patenterteilung:
**04.09.91 Patentblatt 91/36**

(84) Benannte Vertragsstaaten:
**AT BE CH DE ES FR GB IT LI NL SE**

(56) Entgegenhaltungen:
**EP-A- 0 173 888**
**WO-A-86/01215**
**DE-A- 3 535 711**
**US-A- 3 789 045**

(73) Patentinhaber: **BASF Aktiengesellschaft**
**Carl-Bosch-Strasse 38**
**W-6700 Ludwigshafen(DE)**

(72) Erfinder: **Horn, Peter, Dr.**
**Neue Stucker 5**
**W-6900 Heidelberg(DE)**
Erfinder: **Schmidt, Hans Ulrich**
**Wredestrasse 53**
**W-6700 Ludwigshafen(DE)**

**EP 0 260 685 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Herstellung von zellhaltigen oder kompakten Formkörpern aus Polyurethan(PU)-, Polyharnstoff(PH)-, Polyurethan-Polyharnstoff(PU-PH)-, Polyurethan-Polyharntoff-Polyamid(PU-PH-PA)- oder Polyharnstoff-Polyamid(PH-PA)-Elastomeren in offenen oder vorzugsweise geschlossenen Formwerkzeugen nach dem Polyisocyanat-polyadditionsverfahren, zweckmäßigerweise mittels der bekannten Reaktionsspritzgußtechnik (RIM, reaction injection moulding) ist Gegenstand zahlreicher Patent- und Literaturpublikationen. Beispielhaft verweisen möchten wir auf die DE-A-26 22 951 (US 4 218 543), in der PU-PH-Systeme, der im wesentlichen aus organischen Polyisocyanaten, höhermolekularen Polyhydroxylverbindungen, reaktiven aromatischen Di- bzw. Polyaminen, die in ortho-Stellung zu den Aminogruppen durch Alkylgruppen substituiert sind, und starken Katalysatoren für die Reaktion zwischen Hydroxyl- und Isocyanatgruppen bestehen, beschrieben werden. Obgleich die äußerst schnelle Reaktion zwischen den genannten Aufbaukomponenten angeblich die Anwendung von Trennmitteln für die Entformung der Formteile aus polierten Metallwerkzeugen überflüssig macht, wird auf die zusätzliche Verwendung von bekannten Trennmitteln auf Wachs- und Silikonbasis sowie von inneren Trennmitteln, wie sie aus der DE-AS 19 53 637 (US 3 726 952) und der DE-AS 21 21 670 (GB 1 365 215) bekannt sind, hingewiesen.

Als derartige Trennmittel werden in der DE-AS 19 53 637 mindestens 25 aliphatische Kohlenstoffatome aufweisende Salze von aliphatischen Mono- oder Polycarbonsäuren und primären Mono-, Di- oder Polyaminen mit zwei oder mehr Kohlenstoffatomen oder Amid- oder Estergruppen aufweisenden Aminen, die mindestens eine primäre, sekundäre oder tertiäre Aminogruppe besitzen, genannt. Nach Angaben der DE-AS 21 21 670 wird hingegen eine Mischung aus mindestens zwei Verbindungen aus der Gruppe der Amin-Carbonsäure-Salze gemäß DE-AS 19 53 637, der gesättigten und ungesättigten COOH- und/oder OH-Gruppen aufweisenden Ester von Mono- und/oder Polycarbonsäuren und mehrwertigen Alkoholen oder der natürlichen und/oder synthetischen Öle, Fette oder Wachse als Trennmittel verwendet. Aber selbst die Mitverwendung dieser Formtrennmittel führt bei den primäre aromatische Diamine enthaltenden Formulierungen zur Herstellung von PU-PH-Formkörpern nach der Reaktionsspritzgußtechnik im allgemeinen bestenfalls zu einer geringfügigen Verbesserung der selbsttrennenden Eigenschaften. Bei Verwendung von saure Gruppen, insbesondere Carboxylgruppen, aufweisenden Trennmitteln, ist außerdem nachteilig, daß die Katalyse der hochreaktiven Formulierungen gestört wird und dadurch Formteile ohne Anfangsfestigkeit gebildet werden.

Zur Vermeidung dieser Nachteile werden nach Angaben der EP-OS 81 701 (AU 82/90150) anstelle von hochmolekularen Polyhydroxylverbindungen Polyoxialkylen-polyamine verwendet, deren gegenüber Polyisocyanaten reaktive Gruppen zumindest zu 50 % aus primären und/oder sekundären Aminogruppen bestehen. Auf diese Weise kann man auf die Anwendung externer Trennmittel verzichten. Durch den Einsatz von kostspieligen Polyoxialkylen-polyaminen werden jedoch nicht nur die erhaltenen Formkörper teurer, sondern auch deren Verwendbarkeit aufgrund der veränderten mechanischen Eigenschaften auf spezielle Anwendungsgebiete beschränkt.

Eine Verbesserung der selbsttrennenden Eigenschaften bei der Herstellung von PU-PH-Formkörpern nach der RIM-Technik konnte durch die Verwendung von Carbonsäureestern und/oder Carbonsäureamiden, hergestellt durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400, als inner e Formtrennmittel nach Angaben der EP-A-153 639 erzielt werden.

Gemäß EP-A-180 749 (AU 85/47498) werden als innere Trennmittel Estergruppen aufweisende Kondensationsprodukte mit einem mittleren Molekulargewicht von 900 bis 4500, einer Säurezahl von unter 5 und einer Hydroxylzahl von 12,5 bis 125 aus 3 bis 15 Mol Rizinolsäure und einem Mol eines ein- oder mehrwertigen Alkohols eingesetzt.

Nach Angaben der EP-A-0 173 888 (US-PS 4 519 965) finden als innere Formtrennmittel bei der Reaktionsspritzgußtechnik Mischungen Verwendung aus einem Zinkcarboxylat mit 8 bis 24 Kohlenstoffatomen im Carboxylrest und Aminreste enthaltenden, mit Isocyanatgruppen reagierenden Polymeren zur Verbesserung der Verträglichkeit des Zinkcarboxylats mit den Aufbaukomponenten zur PU-PH-Herstellung.

In der WO 84/03288 (EP-A-01 19 471) wird als inneres Trennmittel eine Mischung aus mindestens einer primäre und/oder sekundäre Aminogruppen enthaltenden Verbindung mit reaktiven Wasserstoffatomen und mindestens einem Metallsalz einer Carbon-, Phosphor- oder Borsäure im Gewichtsverhältnis von mindestens 2:1 beschrieben. Nachteilig an diesen Mischungen ist ihr starker Einfluß auf die Reaktivität, z.B. die Startzeit des Systems. Die Formulierung reagiert so schnell, daß in einer Vielzahl von Fällen die Formwerkzeuge, insbesondere solche mit komplizierter Raumform, nicht vollständig gefüllt werden konnten. Die aminogruppenhaltigen Verbindungen können ferner als Kettenabbrecher wirken und, sofern es sich um

niedermolekulare Substanzen handelt, zu Geruchsbelästigungen führen.

Nach Angaben der WO 86/01215 werden in ähnlich zusammengesetzten Trennmittelgemischen als Amine ausschließlich tertiäre Amine verwendet, die jedoch zum Ausschwitzen aus dem Formkörper neigen und die Lackierbarkeit nachteilig beeinflussen können. Da die tertiären Amine außerdem aufgrund ihrer katalytischen Wirkung zu Nebenreaktionen, z.B. zur Isocyanuratisierung, und bei zelligen Formkörpern zu einer unerwünschten inhomogenen Zellstruktur führen können, können sie nicht in beliebigen Mengen eingesetzt werden. Auch bei diesen Formulierungen wird die Startzeit in vielen Fällen zu schnell.

Mit Hilfe der beschriebenen Methode konnten die Entformungseigenschaften der PU-PH-Formkörper in Abhängigkeit von der Zusammensetzung des Systems zwar teilweise verbessert werden, ohne das Problem jedoch endgültig und zufriedenstellend zu lösen.

Bekannt ist außerdem die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug, die beispielsweise beschrieben wird in der DE-A-16 94 138 (GB 1 209 243), DE-C 19 55 891 (GB 1 321 679) und DE-B 17 69 886 (US 3 824 199) und von PU-PH-PA- und PH-PA-Formkörpern hergestellt nach dem RIM-Verfahren, z.B. gemäß US-A-4 552 945.

Innere Formtrennmittel zur Herstellung von Formkörpern nach dem Polyisocyanat-polyadditionsverfahren, bestehend aus

A) einer Mischung aus

i) 5 bis 80 Gew.-Teilen mindestens eines organischen Amins und/oder cyclischen Lactams,

ii) 20 bis 95 Gew.-Teilen mindestens eines Metallsalzes der Stearin- und/oder Isostearinsäure und

(iii) 0 bis 5 Gew.-Teilen eines Metallsalzes einer organischen Mono- und/oder Dicarbonsäure und

B) 0,1 bis 200 Gew.%, bezogen auf das Gesamtgewicht der Mischung (A), mindestens einer organischen Mono- und/oder Dicarbonsäure oder deren Anhydride

werden beschrieben in der DE-A-35 35 711. Durch die Verwendung dieses inneren Trennmittels können in Verbindung mit aromatischen Diaminen als Kettenverlängerungsmittel zellhaltige oder kompakte PH- und PU-PH-Formkörper nach Angaben der DE-A-35 35 711 und PU-Formkörper mit einem zelligen Kern und einer verdichteten Randzone nach Angaben der DE-A-36 07 447 in Versuchsserien von mehr als 30 Formteilen problemlos hergestellt werden.

Obgleich durch die Verwendung der zuletzt genannten inneren Formtrennmittel die Anzahl der Entformungen bei der Herstellung von Formkörpern nach dem Polyisocyanat-polyadditionsverfahren deutlich verbessert werden konnte, konnte eine gewisse nachteilige Beeinflussung der Startzeit bei einzelnen Formulierungen nicht vollständig ausgeschlossen werden.

Die Aufgabe der vorliegenden Erfindung bestand darin, innere Formtrennmittel für die Herstellung von zelligen oder kompakten Formkörpern in offenen oder vorzugsweise geschlossenen Formwerkzeugen nach dem Polyisocyanat-polyadditionsverfahren, vorteilhafterweise mittels der RIM-Technik, zu entwickeln, die die obengenannten Nachteile ganz oder zumindest teilweise überwinden und zu einer weiteren Verbesserung der Serienproduktion von Formkörpern in großen Stückzahlen beitragen.

Diese Aufgabe konnte überraschenderweise gelöst werden durch die Verwendung von Ketiminen, Aldiminen, Enaminen oder cyclischen Schiff'schen Basen bei der Herstellung der inneren Formtrennmittel.

Gegenstand der Erfindung sind somit innere Formtrennmittel zur Herstellung von Formkörpern nach dem Polyisocyanat-polyadditionsverfahren, die enthalten

A) mindestens ein Ketimin, Aldimin, Enamin, eine cyclische Schiff'sche Base oder eine Mischung aus mindestens zwei der genannten Verbindungen,

B) mindestens ein Metallsalz einer organischen Carbonsäure mit 8 bis 24 Kohlenstoffatomen und

C) gegebenenfalls mindestens eine organische Carbonsäure, organische Sulfonsäure, Mineralsäure oder Amidosulfonsäure.

Vorzugsweise Verwendung finden innere Formtrennmittel zur Herstellung der Formkörper nach dem Polyisocyanat-polyadditionsverfahren, die bestehen aus

A) 5 bis 90 Gew.-Teilen, vorzugsweise 20 bis 80 Gew.-Teilen mindestens eines Ketimins, Aldimins, Enamins, einer cyclischen Schiff'schen Base oder einer Mischung aus mindestens zwei der genannten Verbindungen,

B) 10 bis 95 Gew.-Teilen, vorzugsweise 30 bis 85 Gew.-Teilen mindestens eines Metallsalzes eines organischer Carbonsäure mit 8 bis 24 Kohlenstoffatomen und

C) 0 bis 50 Gew.-Teilen, vorzugsweise 0 bis 30 Gew.-Teilen mindestens einer organischen Carbonsäure, organischen Sulfonsäure, Mineralsäure oder Amidosulfonsäure, bezogen auf 100 Gew.-Teile der Aufbaukomponenten (A) und (B).

Gegenstände der Erfindung sind ferner die Verwendung der inneren Formtrennmittel nach den Ansprüchen 1 oder 2 zur Herstellung von kompakten oder zellhaltigen Formkörpern oder Formkörpern mit einem zellhaltigen Kern und einer kompakten Randzone nach dem Polyisocyanat-polyadditionsverfahren, vorzugsweise mittels der Reaktionsspritzguß-Technik gemäß Anspruch 10 und

ein Verfahren zur Herstellung von zelligen oder kompakten Formkörpern oder Formkörpern mit einem zelligen Kern und einer kompakten Randzone mit verbesserten Entformungseigenschaften nach dem Polyisocyanat-polyadditionsverfahren, vorzugsweise mittels der Reaktionsspritzguß (RIM)-Technik, durch Umsetzung von

a) organischen Polyisocyanaten,

b) höhermolekularen Verbindungen mit mindestens zwei reaktiven Wasserstoffatomen,

c) Kettenverlängerungsmitteln und/oder Vernetzern

in Gegenwart von

e) inneren Formtrennmitteln,

f) Katalysatoren und gegebenenfalls

g) Treibmitteln,

h) Hilfsmitteln und/oder Zusatzstoffen

in offenen oder vorzugsweise geschlossenen Formwerkzeugen, das dadurch gekennzeichnet ist, daß man als inneres Formtrennmittel (e) eine Mischung verwendet, bestehend aus

A) 5 bis 90 Gew.-Teilen, vorzugsweise 20 bis 80 Gew.-Teilen mindestens eines Ketimins, Aldimins, Enamins, einer cyclischen Schiff'schen Base oder einer Mischung aus mindestens zwei der genannten Verbindungen,

B) 10 bis 95 Gew.-Teilen, vorzugsweise 30 bis 85 Gew.-Teilen mindestens eines Metallsalzes einer organischen Carbonsäure mit 8 bis 24 Kohlenstoffatomen und

C) 0 bis 50 Gew.-Teilen, vorzugsweise 0 bis 30 Gew.-Teilen und insbesondere 0 bis 25 Gew.-Teilen mindestens einer organischen Carbonsäure, organischen Sulfonsäure, Mineralsäure oder Amidosulfonsäure, bezogen auf 100 Gew.-Teile der Aufbaukomponenten (A) und (B), nach Anspruch 11.

Das innere Formtrennmittel (e) wird zur Herstellung der Formkörper zweckmäßigerweise in einer Menge von 0,1 bis 15 Gew.-Teilen, vorzugsweise 2 bis 10 Gew.-Teilen, bezogen auf 100 Gew.-Teile der Aufbaukomponenten (b) und (c) verwendet.

Zu den Ausgangsstoffen zur Herstellung der erfindungsgemäßen inneren Formtrennmittel ist folgendes auszuführen:

A) Wie bereits dargelegt wurde, finden als Ausgangskomponente (A) Ketimine, Aldimine, Enamine oder cyclische Schiff'sche Basen Verwendung. Die genannten Verbindungen können hierbei einzeln oder in Form von Mischungen innerhalb oder zwischen den einzelnen Verbindungsklassen eingesetzt werden. Geeignet sind auch Mischungen aus den genannten Verbindungen und in diesen löslichen Oligourethanen und/oder Oligoharnstoffen mit Molekulargewichten von 151 bis 700, vorzugsweise von 200 bis 600 und Schmelzpunkten von 30 bis 280° C, vorzugsweise von 70 bis 250° C.

Die als Ketimine und/oder Aldimine geeigneten Verbindungen können in an sich bekannter Weise hergestellt werden durch Umsetzung von

substituierten oder unsubstituierten aliphatischen, cycloaliphatischen, heterocyclischen und/oder aromatischen primären Monoaminen mit 1 bis 20 Kohlenstoffatomen und/oder primären Polyaminen, vorzugsweise primäre Diaminen, mit 2 bis 20 Kohlenstoffatomen,

substituierten oder unsubstituierten aliphatischen, cycloaliphatischen, heterocyclischen und/oder aromatischen primären Mono- und/oder Polyaminen, die zusätzlich sekundäre und/oder tertiäre Aminogruppen und/oder heterocyclische Reste und/oder Hydroxylgruppen und/oder Ethergruppen gebunden enthalten,

linearen, verzweigten oder cyclischen Alkanolaminen mit 2 bis 22 Kohlenstoffatomen und/oder

Polyoxialkylen-polyaminen mit Molekulargewichten von 204 bis 5000,

mit aromatischen, aliphatisch-aromatischen, cycloaliphatischen oder aliphatischen Ketonen und/oder Diketonen oder gegebenenfalls substituierten aliphatischen und/oder aromatischen Aldehyden, Dialdehyden und/oder Acetalen.

Als primäre aliphatische Monoamine mit 1 bis 20 Kohlenstoffatomen, vorzugsweise 4 bis 12 Kohlenstoffatomen kommen beispielsweise in Betracht: Methyl-, Ethyl-, Propyl-, Isopropyl-, n-Butyl-, iso-Butyl-, sek.-Butyl-, n-Pentyl-, iso-Pentyl-, Amyl-, 1,2-Dimethyl-propyl-, n- und iso-Hexyl-, 5-Methyl-2-hexyl-,Octyl-, 2-Ethyl-hexyl-, 6-Methyl-heptyl-2-, 2-Ethyl-octyl-, Decyl-, Tridecyl-, Dodecyl-, Hexadecyl-, Octadecyl- und Stearylamin. Die primären aliphatischen Amine können gegebenenfalls auch substituiert, z.B. mit Aryl-, Alkoxi-, Acetalresten und/oder Halogenatomen substituiert sein. Primäre Amine der genannten Art sind beispielsweise 2-Phenyl-ethyl-, 1-Phenyl-ethyl-, Benzyl-, o-Methoxiphenyl-ethyl-, p-Methoxiphenyl-ethyl-, 2-Phenyl-propyl-, 1-Methyl-3-phenyl-propyl-, Homoveratryl-, 2-Methoxiethyl-, 2-Ethoxiethyl-, 3-Methoxipropyl-, 3-Ethoxipropyl-, 3-(2-Ethylhexoxi)-propyl-, 3-Tridecyloxipropyl-, 3-Stearyloxipropyl-, 1-Methoxi-methyl-propylamin, Polyoxialkylenmonoamine 2-Amino-propionaldehyddimethylacetal, 9-Phenoxi-4,7-dioxanonan-1-amin und 3-[2(2-Phenoxiethoxi)ethoxi]-1-propanamin.

Als primäre cycloaliphatische Amine seien beispielhaft genannt: Cyclopropylmethyl-, Cyclohexyl-, 1-Cyclohexylethyl-, 2-Methyl-cyclohexyl-, 1-Ethinylcyclohexyl- und Norbornylamin.

Als primäre aromatische Amine seien beispielsweise genannt: Anilin o-Toluidin, 4-Nitro-2-toluidin, 2,6-Dichlor-4-nitroanilin und 2,6-Dibrom-4-nitroanilin.

Als primäre Polyamine, vorzugsweise primäre Diamine, mit 2 bis 20 Kohlenstoffatomen, vorzugsweise 2 bis 12 Kohlenstoffatomen kommen beispielsweise in Betracht: aliphatische Diamine, wie z.B. Ethylen-, 1,2- bzw. 1,3-Propylen-, 1,4-Butylen-, 1,5-Pentamethylen-, 1,6-Hexamethylen-, 1,10-Decylen-, 1,12-Dodecylen- und Neopentylendiamin, cycloaliphatische Diamine, wie z.B. 4,4′-Diamino-dicyclohexylmethan, 4,4′-Methylen-bis-(2-ethyl-6-methyl-cyclohexylamin), 3,3′-Dimethyl-4,4′-diamino-dicyclohexylmethan, (3-Methyl-4-amino-cyclohexyl)-(3-Methyl-4-aminophenyl)-methan und aromatische, gegebenenfalls am Arylrest durch Alkyl-, Alkoxi-, Nitro-, Cyanogruppen und/oder Halogenatome substituierte Polyamine wie z.B. o-, m- und/oder p-Phenylen-diamin, 2,4- und/oder 2,6-Toluylen-diamin, Toluidin-Rohbasen, 2,2′-, 2,4′- und/oder 4,4′-Diamino-diphenylmethan, Polyphenyl-polymethylen-polyamine, 3,3′-Dimethyl-4,4′-diamino-diphenylmethan, 3,3′-Dimethyl-4,4′-diamino-diphenylsulfon, 3,3′-Dimethyl-4,4′-diamino-diphenylether und 3,5-Diethyl-2,4- und/oder -2,6-toluylendiamin.

Als gegebenenfalls substituierte aliphatische, cycloaliphatische, heterocyclische und/oder aromatische primäre Mono-und/oder Polyamine mit 2 bis 20 Kohlenstoffatomen, vorzugsweise 2 bis 18 Kohlenstoffatomen, die zusätzlich sekundäre und/oder tertiäre Aminogruppen, heterocyclische Reste, Hydroxylgruppen und/oder Ethergruppen gebunden enthalten, kommen beispielsweise in Betracht: Diethylen-triamin, Dipropylen-triamin, Dihexamethylen-triamin, Bis-(4-aminocyclohexyl)-amin, 2-Dimethylamino-ethylamin, 2-Diethylaminoethylamin, 2-Diisopropylaminoethylamin, 2-Dibutylaminoethylamin, 4-Diethylaminobutylamin, 1-Diethylamino-4-aminopentan, Dimethylaminoneopentylamin, 3-(2-Ethylhexoxi)-propylamin, 3-(2-Aminoethyl)-aminopropylamin, N,N′-Bis(3-aminopropyl)ethylendiamin, Kondensationsprodukte aus Diethylentriamin, N-2-Aminoethyl ethanolamin, 2-Aminoethoxiethanol-2, 4,7-Dioxadecan-1,10-diamin, 4,9-Dioxadodecan-1,12-diamin, 7-Methyl-4,10-dioxatridecan-1,13-diamin, 4,7,10-Trioxatridecan-1,13-diamin, 4,4′-Diamino-dicyclohexylether, N,N′-Bis(3-aminopropyl)-propylendiamin-1,2 bzw. -1,3, 2-(1-Pyrrolidyl)-ethylamin, 2-(1-Piperidyl)-ethylamin, 1-(2-Aminoethyl)-piperidin, 1-(2-Aminopropyl)-piperidin, 1-(2-Aminoethyl)-morpholin, 4-(3-Aminopropyl)-morpholin, 2-(4-Morpholinyl)-ethylamin, 1-(3-Aminopropyl)-imidazol, 1-(2-Aminoethyl)-piperazin, 1,4-Bis-(2-aminoethyl)-piperazin, 1,4-Bis(3-aminopropyl)-piperazin, Tris-(aminoethyl)-amin und Tris-(3-aminopropyl)-amin.

Beispiele für lineare, verzweigte oder cyclische Alkanolamine mit 2 bis 22 Kohlenstoffatomen, vorzugsweise 2 bis 10 Kohlenstoffatome sind u.a. Ethanolamin, 3-Propanolamin, 4-Butanolamin, 2-Aminobutanol-1, 2,2-Dimethyl-3-aminopropanol-1, 4-Methyl-4-aminopentanol-2, 2,2′-Aminoethoxiethanol, N-Aminoethylethanolamin, N-Aminoethylisopropanolamin, 1-(2-Hydroxiethyl)-piperidin, 1-(2-Hydroxiethyl)-morpholin und 1-(2-Hydroxiethyl)-piperazin.

Als Polyoxialkylen-polyamine mit einem Molekulargewicht von 204 bis 5000, vorzugsweise von 400 bis 2000 werden vorteilhafterweise solche mit primären oder primären und sekundären Aminogruppen und einer Funktionalität von 2 bis 6, vorzugsweise 2 bis 4 verwendet. Beispielhaft genannt seien Polyoxipropylen-diamine, Polyoxiethylendiamine, Polyoxipropylen-polyoxiethylen-diamine, Polyoxipropylentriamine, Polyoxiethylen-triamine, Polyoxipropylen-polyoxiethylentriamine, Polyoxipropylen-polyoxiethylen-tetramine und Bis(3-aminopropyl)-polyoxibutylenether mit Molekulargewichten bis 750. Geeignet sind auch Polyoxialkylen-polyamine, die bis zu 30 %, vorzugsweise bis zu 15 % endständige primäre und/oder sekundäre Hydroxylgruppen gebunden enthalten.

Die organischen Mono- und/oder Polyamine können einzeln oder als Mischungen aus der gleichen oder aus verschiedenen Verbindungsklassen eingesetzt werden.

Als organische Mono- und/oder Polyamine haben sich insbesondere bewährt und werden daher vorzugsweise verwendet n-Butylamin, n-Pentylamin, n-Hexylamin, n-Octylamin, 1,3-Propylen-diamin, 1,6-Hexamethylen-diamin, Dipropylen-triamin, 2,2-Dimethyl-propylen-diamin-1,3 und die Toluidin-Rohbasen.

Zur Herstellung der erfindungsgemäß verwendbaren Ketimine werden vorteilhafterweise Ketone der Formel $R^1$-CO-$R^2$ verwendet, in der die organischen Reste $R^1$ und $R^2$ gleich oder verschieden sind und einen aliphatischen, cycloaliphatischen oder aromatischen Rest oder beide Reste gemeinsam einen cycloaliphatischen Rest bedeuten. Die organischen Reste $R^1$ und $R^2$ können gegebenenfalls olefinisch ungesättigte Gruppen und/oder Substituenten, wie z.B. Hydroxyl-, Alkoxi-, tertiäre Amino-, Cyanogruppen oder Halogenatome gebunden enthalten, wobei, sofern überhaupt substituierte Ketone eingesetzt werden, solche

bevorzugt sind, deren Reste unter den Reaktionsbedingungen der Ketiminherstellung inert sind. Vorzugsweise Anwendung finden Ketone, die aliphatische oder gemischt aliphatische und aromatische Reste gebunden enthalten. Als geeignete Ketone und/oder Diketone seien beispielhaft genannt: Aceton, Methylethylketon, Diethylketon, Methylpropylketon, Methylisopropylketon, Methyl-n-butylketon, Methylisobutylketon, Ethylisopropylketon, Methylisoamylketon, Di-n-propylketon, Diisopropylketon, Cyclopentanon, Cyclohexanon, Acetophenon, Benzophenon, Hydroxiaceton, Methoxiaceton, Di-(n-butylamino)aceton, 1-Hydroxibutanon-2, 4-Hydroxibutanon-2, 2-Methylhepten-2-on-6, 2,5-Hexandion, Phenylaceton, o-Methoxiphenylaceton, p-Methoxiphenylaceton, 4-Phenylbutanon-2, Phenylpropandion-1,2, N,N,N'N'-Tetramethyl-4,4'-diaminobenzophenon und 3,3,5-Trimethylcyclohexanon. Die Ketone und/oder Diketone können einzeln oder in Form von Mischungen eingesetzt werden. Anwendung finden vorzugsweise Aceton, Methylisobutylketon, Cyclopentanon, Cyclohexanon und Phenylaceton und inbesondere solche Ketone, die in α-Stellung zur Carbonylgruppe ein Wasserstoffatom gebunden haben, einen Siedepunkt von unter ungefähr 170° besitzen und/oder mit Wasserdampf leicht flüchtig sind. Die Herstellung der Ketimine wird zweckmäßigerweise nach bekannten Verfahren, wie z.B. in Houben-Weyl, Methoden der organischen Chemie, Band VII/2b, Teil II, Georg Thieme Verlag, Stuttgart, 1976, 4. Auflage, Seiten 1948 ff beschrieben, in Gegenwart von inerten Lösungsmitteln, die auch als Schleppmittel zur Auskreisung von Wasser dienen, und geringen Mengen an Katalysator, wie z.B. p-Toluolsulfonsäure, durchgeführt.

Zur Herstellung der erfindungsgemäß verwendbaren Aldimine werden neben den oben beschriebenen primären Aminen als andere Ausgangsverbindung gegebenenfalls substituierte aliphatische und/oder aromatische Aldehyde, Dialdehyde und/oder Acetale verwendet, wobei vorzugsweise solche Aldehyde oder Acetale eingesetzt werden, die in α-Stellung zur Formylgruppe bzw. dem Acetalrest ein Wasserstoffatom gebunden haben.

Als geeignete Aldehyde, Dialdehyde und/oder Acetale seien beispielhaft genannt: aliphatische Aldehyde wie z.B. Acetaldehyd, Propionaldehyd, n-Butyraldehyd, iso-Butyraldehyd, Methoxiacetaldehyd, 2-Acetoxipropionaldehyd, n-Valeraldehyd, Isovaleraldehyd, Pivalaldehyd, 2-Methylbutanal, 3-Methyl-2-butenal, 2-Methylpentanal, 2-Ethylhexanal, Glyoxal, Glutardialdehyd sowie die entsprechenden Acetale, vorzugsweise Dimethyl- oder Diethylacetale und aromatische Aldehyde wie z.B. Benzaldehyd, 2-Phenylpropanal, p-Toluylaldehyd, 4-Methoxibenzaldehyd, 4-Dimethylaminobenzaldehyd, 4-Diethylaminobenzaldehyd und Terephthaldialdehyd. Die Aldehyde, Dialdehyde und Acetale können einzeln oder als Mischungen verwendet werden. Vorzugsweise Verwendung finden Acetaldehyd, Isobutyraldehyd und 2-Phenylpropanal.

Die Aldimine werden zweckmäßigerweise nach bekannten Verfahren, wie z.B. in Bull. Soc. Chim. (1947), Seiten 716 ff beschrieben, hergestellt. Eine ausführliche Beschreibung geeigneter Ketimine und Aldimine wurde publiziert in Chemical Reviews 63 (1963), Seiten 489ff.

Zur Herstellung der inneren Formtrennmittel sind ferner Enamine und/oder Polyenamine (A) verwendbar, die hergestellt werden durch Umsetzung von gegebenenfalls substituierten aliphatischen, cycloaliphatischen, heterocyclischen und/oder aromatischen sekundären Mono- und/oder Polyaminen mit aliphatischen Aldehyden oder cycloaliphatischen Ketonen.

Als sekundäre Amine kommen beispielsweise in Betracht Verbindungen mit der Formel

$R^3$-NH-A-NH-$R^4$ ,

in der $R^3$ und $R^4$ gleiche oder verschiedene aliphatische Reste mit 1 bis 6 C-Atomen, vorzugsweise 1 bis 4 C-Atomen oder cycloaliphatische Reste mit 5 bis 6 C-Atomen bedeuten, wie z.B. Methyl-, Ethyl-, n- oder iso-Propyl-, n-, iso- oder sek.-Butyl-, Cyclopentyl- und Cyclohexylreste, und A eine Alkylengruppe mit 2 bis 16 C-Atomen, eine Cycloalkylengruppe mit 5 bis 20 C-Atomen, eine Arylengruppe mit 6 bis 15 C-Atomen oder ein zweiwertiger Polyoxialkylenrest mit einem Molekulargewicht von 400 bis 5000 ist.

Als sekundäre Amine eignen sich ferner cyclische Diamine mit der Formel

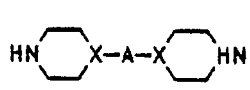 ,

in der A die obengenannte Bedeutung hat und X ein N-Atom oder CH-Gruppe ist, wobei für X gleich CH-auch der Rest A entfallen kann, in 1-Stellung substituierte, vorzugsweise alkylsubstituierte, Piperazine, wie z.B. 1-(2-Hydroxyethyl)-piperazin, sowie Morpholin.

Als Beispiele für aliphatische Aldehyde und cyclische Ketone seien genannt: Acetaldehyd, Propionaldehyd, n- und iso-Butyraldehyd, Cyclopentanon, Trimethylcyclopentanon, Cyclohexanon, Trimethylcyclohexanon u.a.

Die Herstellung geeigneter Enamine und Polyenamine ist bekannt und wird beispielsweise beschrieben in Makromolekulare Chemie 108 (1967) S. 1ff.

Als Aufbaukomponente (A) zur Herstellung der inneren Formtrennmittel eignen sich außerdem cyclische Schiff'sche Basen. Die Herstellung derartiger Verbindungen wird beispielsweise beschrieben in Journal of Chemical Society [London], 1964, Seiten 2445ff und Chemische Berichte 91 [1958], Seiten 1133ff. Besonders bewährt haben sich und daher vorzugsweise Anwendung finden 2-Methyl-piperidin-$\Delta^1$ und/oder 3,4-Dihydroisochinolin.

Die erfindungsgemäß zur Herstellung der inneren Formtrennmittel verwendbaren Ketimine, Aldimine, Enamine und cyclische Schiff'sche Basen können einzeln oder als Mischungen aus mindestens zwei der genannten Verbindungen aus der gleichen oder unterschiedlichen Verbindungsklassen eingesetzt werden. Sehr gute Ergebnisse wurden erzielt bei Verwendung von Aldiminen aus aliphatischen Aldehyden, wie z.B. Isobutyraldehyd, und Ketiminen aus Ketonen mit aliphatischen und cycloaliphatischen Gruppen, wie z.B. Methylisobutylketon, Cyclopentanon und Cyclohexanon, sowie vorzugsweise mit enolisierbaren Aldiminen und insbesondere Ketiminen, die ein enolisierbares Wasserstoffatom gebunden haben.

Anstelle der obengenannten Ketimine, Aldimine oder Enamine können die inneren Formtrennmittel auch Verbindungen mit gemischten Strukturen, wie z.B. Ketimin-Enamin-, Aldimin-Enamin- oder Ketimin-Enamin-Aldimin-Gruppen als wirksames Agens (A) enthalten. Derartige Verbindungen sind bekannt und sie werden nach üblichen Verfahren hergestellt. Sie unterscheiden sich von den oben beschriebenen Komponenten (A) lediglich durch die Art und Menge der als Ausgangsstoffe eingesetzten Amine, Aldehyde oder Ketone.

Gemischte Ketimin- und Enamingruppen oder Aldimin- und Enamingruppen enthaltende Verbindungen werden z.B. hergestellt durch Umsetzung von Aminen, die primäre und sekundäre Aminogruppen gebunden enthalten, wie 1-(Aminoalkyl)-piperazinen, z.B. 1-(2-Aminoethyl)-piperazin oder Aminoalkylalkanolaminen, wie z.B. Aminoethylethanolamin mit cyclischen Ketonen, wie z.B. Cyclohexanon bzw. Aldehyden, vorzugsweise aliphatischen Aldehyden wie z.B. n-Butyr- oder Isobutyraldehyd. Zur Herstellung von Verbindungen mit Ketimin-Enamin-Aldiminstruktur werden ebenfalls primäre und sekundäre Aminogruppen auf weisende Polyamine mit Mischungen aus cycloaliphatischen Ketonen und/oder anderen zur Ketiminherstellung geeigneten Ketonen und aliphtischen oder aromatischen Aldehyden zur Reaktion gebracht. Die Mengen an eingesetztem Keton und Aldehyd müssen so aufeinander abgestimmt werden, daß zusätzlich zur Ketimin- und Aldimin- eine Enaminbildung eintritt.

Die als Ausgangskomponente (A) geeigneten Ketimine, Aldimine, Enamine und/oder cyclische Schiff'schen Basen können zusätzlich in gelöster Form in Mengen bis zu 20 Gew.%, vorzusgweise von 5 bis 15 Gew.%, bezogen auf das Gewicht der Ketimine, Aldimine, Enamine und/oder cyclischen Schiff'schen Basen, Oligourethane und/oder Oligoharnstoffe mit Molekulargewichten von 151 bis 700, vorzugsweise von 200 bis 600 und Schmelzpunkten von 30 bis 280°C, vorzugsweise von 70 bis 250°C enthalten. Zur Herstellung derartiger Oligourethane oder Oligoharnstoffe werden organische Polyisocyanate oder Isooyanatgruppen enthaltende Prepolymere aus Polyoxialkylen-polyolen, vorzugsweise Polyoxiethylen-, Polyoxipropylen- oder Polyoxipropylen-polyoxiethylenpolyolen, und organischen, vorzugsweise aromatischen Polyisocyanaten mit primären und/oder sekundären Mono- und/oder Polyaminen und/oder linearen aliphatischen und/oder heterocyclischen Alkanolaminen in Gegenwart von inerten Lösungsmitteln, wie z.B. Monochlorbenzol, Toluol, Xylol, Methylenchlorid, Trichlorethylen oder Cyclohexan umgesetzt.

B) Zur Herstellung der Metallsalze (B) finden organische Carbonsäuren, vorzugsweise organische Monocarbonsäuren, mit 8 bis 24 Kohlenstoffatomen, vorzugsweise 16 bis 20 Kohlenstoffatomen, wie z.B. Laurin-, Palmitin-, Öl-, Isostearin und vorzugsweise Stearinsäure Verwendung. Sehr gut bewährt hat sich und daher vorzugsweise eingesetzt wird handelsübliche Stearinsäure, die, ohne daß die Trennwirkung merklich beeinträchtigt wird, bis zu 10 Gew.%, vorzugsweise bis zu 5 Gew.%, andere, gegebenenfalls ungesättigte Carbonsäuren mit mehr als 8 Kohlenstoffatomen enthalten kann.

Als Metalle für die Bildung der Metallsalze (B) eignen sich Metalle der Gruppen IA, IB, IIA oder IIB des Periodensystems (nach Handbook of Chemistry and Physics, publiziert von der Chemical Rubber Company z.B. 63. Aufl., 1982) sowie Aluminium, Chrom, Molybdän, Eisen, Kobalt, Nickel, Zinn, Blei, Antimon oder Wismut. Vorzugsweise Anwendung finden Alkalimetalle, insbesondere Natrium und Kalium, Erdalkalimetalle, insbesondere Magnesium und Calcium sowie als besonders bevorzugtes Metall Zink.

Vorzugsweise werden als Metallsalze (B) die der Isostearinsäure und/oder insbesondere der Stearinsäure eingesetzt, wobei Zinkstearat, Zinkisostearat, Calciumstearat und Natriumstearat oder eine Mischung aus mindestens zwei der genannten Stearate bevorzugt sind. Insbesondere verwendet wird eine Mischung aus Zinkstearat und/oder Zinkisostearat, Calcium- und Natriumstearat.

C) Obgleich bereits Mischungen der Aufbaukomponenten (A) und (B) eine sehr gute Wirksamkeit als

Formtrennmittel bei der Formkörperherstellung zeigen, werden zur Herstellung der erfindungsgemäßen inneren Formtrennmittel vorzugsweise zusätzlich organische Carbonsäuren, organische Sulfonsäuren Mineralsäuren oder Amidosulfonsäure mitverwendet. Vorzugsweise Anwendung finden aliphatische Monocarbonsäuren mit 1 bis 20 Kohlenstoffatomen, vorzugsweise 5 bis 18 Kohlenstoffatomen, aliphatische Dicarbonsäuren mit 2 bis 36 Kohlenstoffatomen, vorzugsweise 2 bis 12 Kohlenstoffatomen, aromatische Monocarbonsäuren mit 7 bis 12 Kohlenstoffatomen, vorzugsweise 7 bis 10 Kohlenstoffatomen und/oder aromatische Dicarbonsäuren mit 8 bis 17 Kohlenstoffatomen, vorzugsweise 8 bis 10 Kohlenstoffatomen, die gegebenenfalls olefinisch ungesättigte Einheiten und/oder mit Isocyanatgruppen reaktive Reste, wie z.B. Hydroxyl-, Amino- oder Alkylaminogruppen, gebunden enthalten können. Anstelle der Mono- und/oder Dicarbonsäuren oder in Gemisch mit diesen können auch die entsprechenden Carbonsäureanhydride eingesetzt werden. Beispielhaft genannt seien aliphatische Mon ocarbonsäuren wie z.B. Ameisensäure, Essigsäure, Propionsäure, Isovaleriansäure, Capronsäure, Caprinsäure, Laurinsäure, Myristinsäure, Palmitinsäure, Stearinsäure, Ricinolsäure, Arachinsäure, Hydroxistearinsäure, Isostearinsäure und Ölsäure, aliphatische Dicarbonsäure wie z.B. Oxalsäure, Bernsteinsäure, Glutarsäure, Adipinsäure, Pimelinsäure, Korksäure, Sebacinsäure, Azelainsäure, Undecandisäure, Dodecandisäure, dimerisierte und trimerisierte Fettsäuren, Maleinsäure und Fumarsäure und aromatische Mono- und/oder Dicarbonsäuren wie z.B. Benzoesäure, die Toluylsäuren, Hydroxibenzoesäuren, Aminobenzoesäuren, Phthalsäure, Isophthalsäure und Terephthalsäure. Vorzugsweise Anwendung finden folgende Mono- und Dicarbonsäuren sowie Carbonsäureanhydride, Stearinsäure, Oxalsäure, Adipinsäure, Benzoesäure, Benzoesäureanhydrid. Die Mono-, Dicarbonsäuren und deren Anhydride können einzeln oder in Form von Mischungen verwendet werden.

Als Carbonsäuren eignen sich jedoch auch Polyester-polyole und/oder Phthalsäuremonoalkylester mit Säurezahlen von 40 bis 300, vorzugsweise von 50 bis 250 und in den Aufbaukomponenten zur Herstellung der Formkörper lösliche Polymerisate mit Molekulargewichten von 600 bis 1500 und Säurezahlen von 150 bis 300, vorzugsweise von 200 bis 280, hergestellt durch Copolymerisation von Acrylsäure und n-Butylacrylat, 2-Hydroxiethylacrylat und/oder Styrol.

Als Aufbaukomponente (C) verwendet werden können ferner organische Sulfonsäuren, vorzugsweise Arylsulfonsäuren wie z.B. p-Toluolsulfonsäure, o-Toluolsulfonsäure sowie deren Gemische. Benzolsulfonsäure, Gemische aus p-Toluolsulfonsäure und Xylolsulfonsäure und das Addukt aus p-Toluolsulfonsäure und Butylenoxid, Mineralsäuren, wie z.B. Schwefelsäure, Phosphorsäure oder Polyphosphorsäure und Amidosulfonsäure.

Zur Herstellung der erfindungsgemäßen inneren Formtrennmittel können die Aufbaukomponenten (A), (B) und gegebenenfalls (C) gleichzeitig oder nacheinander, zweckmäßigerweise unter Rühren bei Temperaturen von 20 bis 150 °C, vorzugsweise von 40 bis 130 °C und insbesondere von 40 bis 100 °C gemischt werden. Nach dem Abkühlen der Mischung sind die erhaltenen Produkte lagerstabil.

Die erfindungsgemäßen inneren Formtrennmittel finden Verwendung zur Herstellung von kompakten oder zelligen Formkörpern oder Formkörpern mit einem zelligen Kern und einer kompakten Außenhaut, sogenannten Integralschaumstoffen, nach dem Polyisocyanat-polyadditionsverfahren. Die inneren Formtrennmittel werden hierzu zweckmäßigerweise in geschmolzenem Zustand bei Temperaturen von 20 bis 120 °C, vorzugsweise von 30 bis 90 °C den Aufbaukomponenten, vorzugsweise den Verbindungen mit reaktiven Wasserstoffatomen, zur Herstellung der Formkörper einverleibt.

Die zelligen oder kompakten Formkörper oder Formkörper mit einem zelligen Kern und einer kompakten Randzone mit verbesserten Entformungseigenschaften, die vorzugsweise aus Polyurethan-, Polyharnstoff-, Polyurethan-Polyharnstoff-, Polyurethan-Polyharnstoff-Polyamid- oder Polyharnstoff-Polyamid-Kunststoffen bestehen, werden hergestellt nach dem Polyisocyanat-polyadditionsverfahren durch Umsetzung von

a) organischen Polyisocyanaten,
b) höhermolekularen Verbindungen mit mindestens zwei reaktiven Wasserstoffatomen,
c) Kettenverlängerungsmitteln und/oder Vernetzern

in Gegenwart von

d) 0,1 bis 15 Gew.-Teilen, vorzugsweise 2 bis 10 Gew.-Teilen, bezogen auf 100 Gew.-Teile der Aufbaukomponenten (b) und (c) eines inneren Formtrennmittels nach den Ansprüchen 1 oder 2,
e) Katalysatoren und gegebenenfalls
f) Treibmitteln,
g) Hilfsmitteln und/oder Zusatzstoffen

nach dem Prepolymer- oder vorzugsweise nach dem one shot-Verfahren mit Hilfe der Niederdruck- oder insbesondere der Reaktionsspritzguß-Technik (RIM) in offenen oder vorzugsweise geschlossenen Formwerkzeugen, zweckmäßigerweise in Formwerkzeugen aus Kunststoffen wie z.B. Epoxid- oder ungesättigten Polye sterharzen oder vorzugsweise aus metallischen Werkstoffen. Die Formulierungen können jedoch

gegebenenfalls auch nach dem Gießverfahren verarbeitet werden.

Die Herstellung von Formkörpern nach dem Polyisocyanat-polyadditionsverfahren mit Hilfe der beschriebenen Verfahrenstechniken ist bekannt. Das vorzugsweise zur Anwendung kommende one shot-Verfahren mit Hilfe der Reaktionsspritzgußtechnik wird beispielsweise beschrieben von Piechota und Röhr in "Integralschaumstoffe", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Nach der genannten Methode wird die Herstellung von gegebenenfalls zelligen Formkörpern aus Polyurethan-Elastomeren z.B. beschrieben in der vorgenannten Monographie "Integralschaumstoffe", aus Polyharnstoff-Elastomeren in der EP-A-81 701, 93 861 (US 4 396 729), 92 672, 93 862 (US 4 444 910 und US 4 433 067) und 93 334, aus Polyurethan-Polyharnstoff-Elastomeren in der DE-B-26 22 951 (US 4 218 543) und den EP-A-26 915, 69 286 und 93 336 und aus Polyurethan-Polyharnstoff-Polyamid- und Polyharnstoff-Polyamid-Elastomeren in der US-A-4 552 943.

Die nach dem erfindungsgemäßen Verfahren hergestellten kompakten Formkörper besitzen eine Dichte von 0.9 bis 1,4 g/cm$^3$, vorzugsweise 1,0 bis 1,2 g/cm$^3$, die zelligen Formkörper eine Dichte von 0,3 bis 1,1 g/cm$^3$, vorzugsweise 0,8 bis 1,0 g/cm$^3$ und die Formkörper mit einem zelligen Kern und einer verdichteten Randzone eine Gesamtdichte von 0,05 bis 1,2 g/cm$^3$, wobei die weichelastischen Formkörper eine Dichte von vorzugsweise 0,2 bis 0,7 g/cm$^3$, insbesondere 0,35 bis 0,7 g/cm$^3$, die halbharten und harten Formkörper eine Dichte von vorzugsweise 0,4 bis 1,1 g/cm$^3$, insbesondere 0,7 bis 1,0 g/cm$^3$ aufweisen.

Die erhaltenen kompakten bzw. mikrozelligen Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkastenverbreiterungen sowie als technische Gehäuseteile, Laufrollen und Schuhsohlen. Formteile mit zelligem Kern und kompakten Randzonen finden beispielsweise Anwendung als Schuhsohlen, Armlehnen, Kopfstützen, Sicherheitsabdeckungen in Fahrgastzellen von Verkehrsmitteln sowie als Sättel für Motorfahrzeuge und Fahrräder und als Deckschichten in Verbundschaumstoffen.

Beispiel 1

a) Herstellung des Ketimins aus Cyclohexanon und n-Pentylamin.

In einem 4 Liter Dreihalskolben, ausgestattet mit einem Rührer und Wasserauskreiser, fügte man zu einer Lösung aus 705,73 g n-Pentylamin und 2000 ml Toluol 873,66 g Cyclohexanon. Die Reaktionsmischung wurde auf eine Ölbadtemperatur von 140 °C erhitzt und bei dieser Temperatur wurden innerhalb von 2 Stunden 147 g Wasser abgetrennt. Anschließend wurde das Toluol abdestilliert und das erhaltene Ketimin bei 0,15 mbar und 99 °C destilliert. Die Ausbeute an Ketimin betrug 1100 g.

b) Herstellung des inneren Formtrennmittels I

Unter Rühren bei Raumtemperatur fügte man zu 489,76 g des nach Beispiel 1a hergestellten Ketimins aus Cyclohexanon und n-Pentylamin 282,4 g Ölsäure. Die Mischung wurde auf 100 °C erwärmt und bei dieser Temperatur eine Stunde gerührt. Nach Zugabe von 772,32 g Zinkstearat, 27,76 g Natriumstearat und 27,76 g Calciumstearat wurde bei 120 °C bis zur Erzielung einer klaren Lösung gerührt. Anschließend ließ man auf Raumtemperatur abkühlen.

Beispiele 2 bis 8

a) Herstellung der Ketimine:

Man verfuhr analog den Angaben des Beispiels 1a, verwandte jedoch die in Tabelle 1 genannten Ausgangsstoffe und Mengen.

b) Herstellung der inneren Formtrennmittel:

Analog den Angaben des Beispiels 1b wurden gemischt
489,7 g des erhaltenen Ketimins,
282,4 g Ölsäure,
772,76 g Zinkstearat,

27,76 g Natriumstearat und
27,76 g Calciumstearat.

Tabelle 1

| Beispiel | Keton Menge [g] | Keton Art | Amin Menge [g] | Amin Art | abgetrennte Wassermenge [g] |
|---|---|---|---|---|---|
| 2* | 774,21 | Cyclohexanon | 725,79 | n-Hexylamin | 129 |
| 3* | 682,8 | Cyclohexanon | 817,20 | n-Octylamin | 160 |
| 4* | 1606 | 4-Methyl-2-pentanon | 700 | Pentylamin | 160 |
| 5 | 931 | Cyclohexanon | 1163 | 6-Methyl-2-heptylamin | 162 |
| 6 | 513,68 | Cyclohexanon | 486,32 | Dimethylaminopropylamin | 90 |
| 7 | 1600 | 4-Methyl-2-pentanon | 796,7 | Methylaminopropylamin | 162 |
| 8** | 957,9 | Cyclohexanon | 542,1 | 2,4-Toluylendiamin | 160 |

* Das überschüssige Cyclohexanon oder 4-Methyl-2-pentanon und gegebenenfalls Toluol wurde bei 0,2 mbar abdestilliert.

** Der Rückstand wurde ohne zusätzliche Reinigung zur Herstellung des Formtrennmittels VIII verwendet.

Tabelle 1 (Fortsetzung)

| Beispiel | Lösungsmittel Menge | Lösungsmittel Art | Ketimin | Siedepunkt °C/mbar | Formtrennmittel |
|---|---|---|---|---|---|
| 2* | 2000 | Toluol | 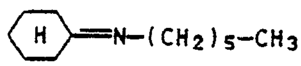 | 99-104/ 0,1-0,15 | II |
| 3* | 2000 | Toluol | 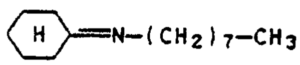 | 128/0,2 | III |
| 4* | - | | 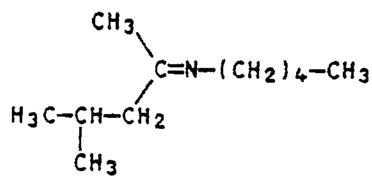 | 60/0,2 | IV |
| 5 | 2000 | Toluol | 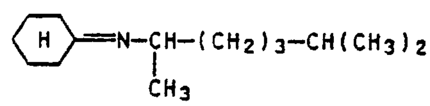 | 100/ 0,1-0,2 | V |
| 6 | 2000 | Toluol | 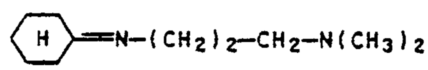 | 88-93/ 0,3 | VI |
| 7 | - | | 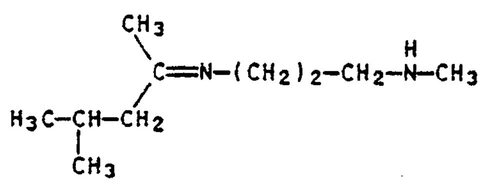 | 60/0,4 | VII |
| 8** | - | | 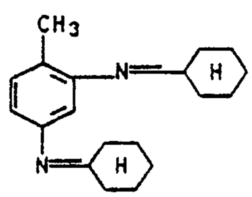 | - | VIII |

* Das überschüssige Cyclohexanon oder 4-Methyl-2-pentanon und gegebenenfalls Toluol wurde bei 0,2 mbar abdestilliert.

** Der Rückstand wurde ohne zusätzliche Reinigung zur Herstellung des Formtrennmittels VIII verwendet.

Beispiel 9

a) Herstellung des Aldimins aus Benzaldehyd und n-Butylamin

In einem 4-Liter-Dreihalskolben, ausgerüstet mit Rührer und Wasserauskreiser, fügte man zu einer Lösung aus 585 g n-Butylamin und 1500 g Toluol innerhalb von 20 Minuten 934 g Benzaldehyd; hierbei stieg die Reaktionstemperatur auf ungefähr 70 °C. Die Reaktionsmischung wurde auf eine Ölbadtemperatur von 120 bis 150 °C erhitzt und bei dieser Temperatur in 4 Stunden 146 g Wasser abgetrennt. Das Toluol wurde danach zunächst bei Normaldruck und anschließend unter vermindertem Druck bei einer Ölbadtemperatur von 150 bis 170 °C abdestilliert. Das erhaltene Aldimin besaß einen Siedepunkt von 105 °C bei 0,2 mbar.

b) Herstellung des inneren Trennmittels IX

Unter Rühren bei Raumtemperatur fügte man zu 489,76 g des nach Beispiel 9a hergestellten N-Butylbenzaldimins 282,40 g Ölsäure. Die Mischung wurde auf 100 °C erwärmt und bei dieser Temperatur eine Stunde gerührt. Nach Zugabe von 772,32 g Zinkstearat, 27,76 g Natriumstearat und 27,76 g Calciumstearat wurde bei 120 °C bis zur Erzielung einer klaren Lösung gerührt. Anschließend ließ man das innere Formtrennmittel auf Raumtemperatur abkühlen.

Beispiel 10

a) Herstellung des Aldimins aus Benzaldehyd und 6-Methyl-2-heptanamin

In einem 4-Liter-Dreihalskolben, ausgerüstet mit Rührer und Wasserauskreiser, fügte man zu einer Lösung aus 904,4 g 6-Methyl-2-aminoheptan und 1200 g Toluol innerhalb von 20 Minuten 817,1 g Benzaldehyd; hierbei stieg die Reaktionstemperatur auf ungefähr 60 °C. Die Reaktionsmischung wurde auf eine Ölbadtemperatur von 120 bis 150 °C erhitzt und bei dieser Temperatur in 3 Stunden 130 g Wasser abgetrennt. Das Toluol wurde danach zunächst bei Normaldruck und anschließend unter vermindertem Druck bei einer Ölbadtemperatur von 150 bis 170 °C abdestilliert. Das erhaltene Aldimin besaß einen Siedepunkt von 97 bis 100,5 °C bei 0,05 mbar.

b) Herstellung des inneren Trennmittels X

Analog den Angaben des Beispiels 9b wurden gemischt

489,76 g 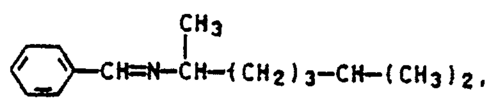 ,

282,40 g Ölsäure,
772,32 g Zinkstearat,
27,76 g Natriumstearat und
27,76 g Calciumstearat.

Beispiel 11

a) Herstellung des Enamins aus Cyclohexanon und 1-(2-Hydroxiethyl)-piperazin

In einem 4-Liter-Dreihalskolben, ausgerüstet mit Rührer und Wasserauskreiser, wurden 1094 g 1-(2-Hydroxiethyl)-piperazin gelöst in 1500 g Toluol und 882 g Cyclohexanon gemischt. Die Mischung wurde auf eine Ölbadtemperatur von 140 bis 150 °C erhitzt und bei dieser Temperatur innerhalb von 30 Stunden 151 g Wasser ausgekreist. Das verbleibende Toluol wurde unter vermindertem Druck abdestilliert. Man erhielt 1287 g Enamin mit einem Siedepunkt von 141 °C bei 0,35 mbar.

b) Herstellung des inneren Formtrennmittels XI

Analog den Angaben des Beispiels 9b wurden gemischt

489,76 g 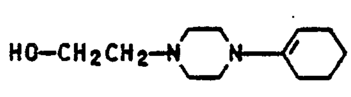 ,

282,40 g Ölsäure,
772,32 g Zinkstearat,
27,76 g Natriumstearat und
27,76 g Calciumstearat.

Beispiel 12

a) Herstellung eines Aldimins aus einem trifunktionellen Polyoxialkylen-polyamin mit einem Molekulargewicht von 440. (®Jeffamin T 403 der Firma Texaco) und Pivalaldehyd.

In einem 4-Liter-Dreihalskolben, ausgerüstet mit Rührer und Wasserauskreiser wurden 800 g Polyoxialkylen-triamin mit einem Molekulargewicht von 440 (Jeffamin T 403), 1500 g Toluol und 378 g Pivalaldehyd gemischt. Die Mischung wurde auf eine Ölbadtemperatur von 140° C erhitzt und bei dieser. Temperatur innerhalb von 10 Stunden 65 g Wasser ausgekreist. Das verbleibende Toluol wurde unter vermindertem Druck abdestilliert. Man erhielt 1040 g Aldimin, das ohne weitere Reinigung zur Herstellung des inneren Trennmittels eingesetzt wurde.

b) Herstellung des inneren Formtrennmittels XII

Analog den Angaben des Beispiels 9b wurden gemischt
489,76 g des Aldimins nach Beispiel 12a,
282,40 g Ölsäure,
772,32 g Zinkstearat,
27,76 g Natriumstearat und
27,76 g Calciumstearat.

Beispiel 13

a) Herstellung eines gemischten Ketimin-Enamins aus einem Polyoxialkylen-polyamin mit einem Molekulargewicht von 5000 mit endständigen primären und sekundären Aminogruppen (®Jeffamin T 5000 der Firma Texaco) und Cyclohexanon.

Analog den Angaben des Beispiels 12a wurden
632,0 g Polyoxyalkylen-polyamin der Aminzahl 29 (Jeffamin T 5000),
2000 g Toluol und
40 g Cyclohexanon
gemischt. Die Mischung wurde auf eine Ölbadtemperatur von 140 bis 150° C erhitzt und bei dieser Temperatur in 24 Stunden 5,5 g Wasser ausgekreist. Das verbleibende Toluol und das überschüssige Cyclohexanon wurden unter vermindertem Druck (0,5 mbar) abdestilliert. Man erhielt 641 g einer Ketimin-Enaminverbindung, die ohne weitere Reinigung zur Herstellung des inneren Trennmittels eingesetzt wurde.

b) Herstellung des inneren Formtrennmittels XIII

Analog den Angaben des Beispiels 9b wurden gemischt
489,76 g des Ketimin-Enamins nach Beispiel 13a,
282,40 g Ölsäure,
772,32 g Zinkstearat,
27,76 g Natriumstearat und
27,76 g Calciumstearat.

Beispiel 14

a) Herstellung eines Ketimins aus Acetophenon und n-Pentylamin

Analog den Angaben des Beispiels 12a wurden 596,2 g n-Pentylamin, 2000 g Toluol und 903,8 g Acetophenon gemischt. Die Mischung wurde auf eine Ölbadtemperatur von 140° C erhitzt und bei dieser Temperatur in 12 Stunden 130 g Wasser ausgekreist. Danach wurde das Toluol abdestilliert unter Normaldruck. Man erhielt ein Ketimin mit einem Siedepunkt von 85 bis 95° C bei 0,2 mbar.

b) Herstellung des inneren Formtrennmittels XIV

Analog den Angaben des Beispiels 9b wurden gemischt

489,76 g 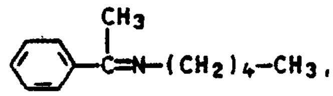

282,40 g Ölsäure,
772,32 g Zinkstearat,
27,76 g Natriumstearat und
27,76 g Calciumstearat.

Beispiel 15

a) Herstellung des Ketimins aus Anilin und Methylisobutylketon

In einem 4-Liter-Dreihalskolben, ausgerüstet mit Rührer und Wasserauskreiser, wurden 700 g Anilin und 2000 g 4-Methyl-2-pentanon in Gegenwart von 0,1 g Toluolsulfonsäure bei 140° C 12 Stunden kondensiert. Hierbei wurden 135 g Wasser abgetrennt. Danach wurde das überschüssige 4-Methyl-2-pentanon bei Normaldruck abdestilliert. Man erhielt ein Ketimin mit einem Siedepunkt von 80° C bei 0,1 bis 0,01 mbar.

b) Herstellung des inneren Formtrennmittels XV

Analog den Angaben des Beispiels 9b wurden gemischt

489,76 g 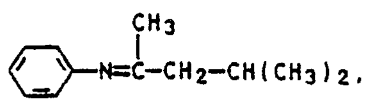

282,40 g Ölsäure,
772,32 g Zinkstearat,
27,76 g Natriumstearat und
27,76 g Calciumstearat.

Beispiel 16

a) Herstellung des Aldimins aus iso-Butyraldehyd und n-Hexylamin

In einem 4-Liter-Dreihalskolben, ausgerüstet mit Rührer und Wasserauskreiser, ließ man zu 840,91 g n-Hexylamin bei Raumtemperatur innerhalb einer Stunde 778,93 iso-Butyraldehyd zutropfen. Dabei stieg die Temperatur auf 50° C an. Die Mischung wurde auf eine Ölbadtemperatur von 120 bis 130° C erhitzt und bei dieser Temperatur 150 g Wasser ausgekreist. Danach wurde der überschüssige iso-Butyraldehyd unter vermindertem Druck abdestilliert. Das erhaltene Aldimin, dessen Struktur durch $^1$H-NMR-Spektroskopie bestätigt wurde, wurde ohne weitere Reinigung zur Herstellung des inneren Formtrennmittels verwendet.

b) Herstellung des inneren Formtrennmittels XVI

Analog den Angaben des Beispiels 9b wurden gemischt
489,8 g $(H_3C)_2$-CH-CH = N-$(CH_2)_5$-$CH_3$,
282,40 g Ölsäure,
772,80 g Zinkstearat,
27,76 g Natriumstearat und
27,76 g Calciumstearat.

Beispiel 17

a) Herstellung eines Ketimin-Enamin-Gemisches durch Umsetzung einer Mischung aus Aminoethylethanolamin, 1-(2-Hydroxiethyl)-piperazin, 1-(2-Aminoethyl)-piperazin und Dipropylentriamin mit Cyclohexanon

In einem 4-Liter-Dreihalskolben, ausgestattet mit Rührer und Wasserauskreiser, wurden
244,36 g Aminoethylethanolamin,
55,70 g 1-(2-Hydroxiethyl)-piperazin,
100,30 g 1-(2-Aminoethyl)-piperazin,
25 g Dipropylentriamin,
1600 g Toluol und
600 g Cyclohexanon
in der genannten Reihenfolge gemischt. Die Mischung wurde auf eine Ölbadtemperatur von 140 °C erhitzt und bei dieser Temperatur in 12 Stunden 92 g Wasser ausgekreist. Danach wurde das Toluol und das überschüssige Cyclohexanon bei 100 °C und 0,1 mbar abdestilliert. Man erhielt ein Ketimin-Enamingemisch, das ohne weitere Reinigung zur Herstellung des Formtrennmittels XVII eingesetzt wurde.

b) Herstellung des inneren Formtrennmittels XVII

Analog den Angaben des Beispiels 9b wurden gemischt
489,76 g des Ketimin-Enamin-Gemisches nach Beispiel 17a,
282,40 g Ölsäure,
772,32 g Zinkstearat,
27,76 g Natriumstearat und
27,76 g Calciumstearat.

Beispiel 18

a) Herstellung der Oligourethane und Oligoharnstoffe

In einem 1-Liter-Dreihalskolben, ausgestattet mit Rührer und Rückflußkühler, fügte man bei Raumtemperatur zu einer Mischung aus 500 g Monochlorbenzol und 100 g einer mit Polyoxipropylenglykol modifizierten, Carbodiimidgruppen enthaltenden 4,4'-Diphenylmethan-diisocyanatmischung mit einem NCO-Gehalt von 26,5 Gew.% innerhalb von 1,5 Stunden das Amin.

Der gebildete Niederschlag wurde danach abfiltriert, mit Monochlorbenzol gewaschen und getrocknet.

Die Art und Menge der verwendeten Amine und die Schmelzpunkte der Endprodukte sind in Tabelle 2 zusammengefaßt.

Tabelle 2

| Beispiel | Amin Menge [g] | Amin Art | Schmelzpunkte der Endpunkte [°C] |
|---|---|---|---|
| 18a 1 | 25,4 | Aminoethylethanolamin | 169-204 |
| 18a 2 | 42,02 | 1-(2-Aminoethyl)-piperazin | 182-210 |
| 18a 3 | 63,54 | 1-(2-Hydroxiethyl)-piperazin | 87-109 |
| 18a 4 | 25,6 | Dipropylentriamin | 234 (unter Zersetzung) |
| 18a 5 | 35,7 | n-Butylamin | 223 (unter Zersetzung) |

b) Herstellung des inneren Formtrennmittels XXIII:

Zu 440,78 g N-Pentyl-cyclohexanonimin hergestellt aus Cyclohexanon und n-Pentylamin nach den Angaben von Beispiel 1a, fügte man unter Rühren bei 100 °C

23,94 g Umsetzungsprodukt gemäß Beispiel 18a1,
9,82 g Umsetzungsprodukt gemäß Beispiel 18a2,
5,46 g Umsetzungsprodukt gemäß Beispiel 18a3,
2,45 g Umsetzungsprodukt gemäß Beispiel 18a4 und
7,31 g Umsetzungsprodukt gemäß Beispiel 18a5.

Die Mischung wurde bei 140° C gerührt bis eine klare Lösung entstand. Die Lösung ließ man auf 120° C abkühlen, fügte 282,4 g Ölsäure hinzu und rührte eine Stunde. Anschließend wurden unter Rühren bei 120° C 772,32 g Zinkstearat, 27,76 g Natriumstearat und 27,76 g Calciumstearat hinzugefügt und so lange bei 120° C gerührt, bis eine klare Lösung entstanden war. Das innere Formtrennmittel ließ man auf Raumtemperatur abkühlen.

Beispiel 19

Herstellung des inneren Formtrennmittels XIX:

Analog den Angaben des Beispiels 9b wurden gemischt:
600,96 g Ketimin nach Beispiel 4,
171,20 g einer Mischung aus p-Toluol- und Xylolsulfonsäure (TX-Acid der Firma Witco Chemicals Corp.),
772,32 g Zinkstearat,
27,76 g Calciumstearat und
27,76 g Natriumstearat.

Beispiel 20

Herstellung des inneren Formtrennmittels XX:

Unter Rühren bei 120° C fügte man zu 772,16 g N-Pentyl-cyclohexanonimin, hergestellt aus Cyclohexanon und n-Pentylamin nach den Angaben des Beispiels 1a, 772,32 g Zinkstearat, 27,76 g Calciumstearat und 27,76 g Natriumstearat. Die Mischung wurde bis zur Erzielung einer klaren Lösung bei 120° C gerührt. Anschließend ließ man auf Raumtemperatur abkühlen.

Beispiele 21 bis 39

Herstellung von Polyurethan-polyharnstoff-Formkörpern

Komponente A: Mischung aus
75,45 Gew.-Teilen eines Polyoxipropylen(80 Gew.%)-polyoxiethylen-(20 Gew.%)-triols mit einer Hydroxylzahl von 26, hergestellt durch Polyaddition von 1,2-Propylenoxid an Trimethylolpropan u nd anschließender Polyaddition von Ethylenoxid an das erhaltene Trimethylolpropan-polyoxipropylen-addukt,
20,00 Gew.-Teilen 3,5-Diethyl-toluylen-diamin-2,4,
0,33 Gew.-Teilen 1,4-Diazabicyclo-(2,2,2)-octan,
0,22 Gew.-Teilen Dibutylzinndilaurat und
4 Gew.-Teilen eines der inneren Formtrennmittel I bis XX nach den Beispielen 1 bis 20.

Komponente B:

Mischung aus mit Polyoxipropylenglykol modifiziertem, Carbodiimidgruppen enthaltenden 4,4'-Diphenylmethan-diisocyanat mit einem NCO-Gehalt von 26,5 Gew.%.

Die Komponenten (A) und (B) wurden auf 50° C erwärmt, im Gewichtsverhältnis (A):(B) gleich 100:48,7 Gew.-Teile nach dem Reaktionsspritzguß-Verfahren auf einer Hochdruckdosieranlage vom Typ ®Puromat 30 der Elastogran-Maschinenbau gemischt und in einem auf 60 bis 70° C temperierten Aluminiumformwerkzeug mit der Raumform einer Automobiltürseitenverkleidung und einer Innendimension von ungefähr 2x1000x10 mm zu Formteilen verarbeitet.

Vor Beginn der Herstellung einer Formteilserie wurde das Formwerkzeug einmalig mit einem externen Trennwachs von Typ ®Fluoricon 36/134/2 der Firma Acmos versiegelt. Die Schußzeit betrug ungefähr 1 Sekunde und die Formstandzeit 45 Sekunden.

Als Anzahl der möglichen Entformungen wurde die Zahl festgelegt, bis zu der der Formkörper beim Öffnen des Formwerkzeugs problemlos entnommen werden konnte, ohne daß durch zu große Adhäsionskräfte der Formkörper an der Formwerkzeugunterseite festgehalten und/oder verzogen wurde.

Wenn der Formkörper mindestens zwanzigmal problemlos entformt werden konnte, wurde die Versuchsserie üblicherweise abgebrochen.

Die erzielten Ergebnisse sind in Tabelle 3 zusammengefaßt.

Tabelle 3

| Beispiel | Formtrennmittel | Zahl der Entformungen |
|---|---|---|
| 21 | I | weit mehr als 20 |
| 22 | II | weit mehr als 20 |
| 23 | III | 20 |
| 24 | IV | weit mehr als 20 |
| 25 | V | 20 |
| 26 | VI | weit mehr als 20 |
| 27 | VII | 20 |
| 28 | VIII | 15 |
| 29 | IX | 20 |
| 30 | X | 15 |
| 31 | XI | 20 |
| 32 | XIII | 20 |
| 33 | XIV | 12 |
| 34 | XV | 12 |
| 35 | XVI | 20 |
| 36 | XVII | weit mehr als 20 |
| 37 | XVIII | weit mehr als 20 |
| 38 | XIX | 15 |
| 39 | XX | weit mehr als 20 |

Beispiel 40

Herstellung eines elastischen Polyharnstoff-Formkörpers

Komponente A: Mischung aus
72,67 Gew.-Teilen Polyoxipropylen-diamin der Aminzahl 44 (®Jeffamine D 2000 der Fa. Texaco),
23,00 Gew.-Teilen 3,5-Diethyl-toluylen-diamin-2,4,
0,33 Gew.-Teilen 1,4-Diazabicyclo-(2,2,2)-octan und
4,0 Gew.-Teilen Formtrennmittel I.

Komponente B:

Mischung aus mit Polyoxipropylen-glykol modifiziertem, Carbodiimidgruppen enthaltenden 4,4'-Diphenylmethan-diisocyanat mit einem NCO-Gehalt von 26,5 Gew.%.

Die Komponenten (A) und (B) wurden auf 50 °C erwärmt und nach dem Reaktionsspritzuß-Verfahren auf einer Hochdruckdosieranlage vom Typ ®Puromat 30 der Elastogran-Maschinenbau in einem auf 60 bis 70 °C temperierten Aluminiumformwerkzeug mit der Raumform einer Automobiltürseitenverkleidung und einer Innendimension von ungefähr 2x100x10 mm zu Formteilen verarbeitet. Vor Beginn der Herstellung

einer Formteilserie wurde das Formwerkzeug einmalig mit einem externen Trennwachs vom Typ ®Fluoricon 36/134/2 der Firma Acmos versiegelt. Das Mischungsverhältnis (A):(B) betrug 100:52,48 Gew.-Teile. Die Formstandzeit betrug 45 Sekunden. Nachdem 20 Formkörper problemlos entformt werden konnten, wurde die Versuchsserie abgebrochen.

Beispiel 41

Herstellung eines harten Polyurethan-Formkörpers

A-Komponente: Mischung aus
52,75 Gew.-Teilen eines Polyoxypropylen-triols mit einer Hydroxylzahl von 875, hergestellt durch Propoxylierung von Trimethylolpropan,
6,10 Gew.-Teilen Dipropylenglykol
21,70 Gew.-Teilen eines Polyoxypropylen-polyoxyethylen-triols mit einer Hydroxylzahl von 35, hergestellt durch Propoxylierung von Glycerin und anschließender Polyaddition von Ehylenoxid an das erhaltene Glycerin-polyoxypropylenaddukt,
0,45 Gew.-Teilen einer 50 gew.%igen wäßrigen Lösung von sulfoniertem Rizinusöl,
1,50 Gew.-Teilen Silikonöl, Stabilisator OS 710 der Fa. Bayer AG,
1,50 Gew.-Teilen Dimethylbenzylamin,
0,2 Gew.-Teilen 1-Methylimidazol,
5,8 Gew.-Teilen Trichlorfluormethan,
5,0 Gew.-Teilen Formtrennmittel II und
5,0 Gew.-Teilen Rizinolsäureester mit einer Hydroxylzahl von 43 und einer Säurezahl von 0,7.

B-Komponente: Mischung aus Diphenylmethan-diisocyanaten und Polyphenyl-polymethylen-polyisocyanaten mit einem NCO-Gehalt von 31 Gew.%.

100 Gew.-Teile der Komponente (A) und 144 Gew.-Teile der Komponente (B) wurden mit Temperaturen von 25 bzw. 28°C nach dem RIM-Verfahren auf einer Hochdruckdosieranlage vom Typ ®Puromat 50 der Elastogran-Maschinenbau, Straßlach bei München gemischt und in einem metallischen Formwerkzeug bei einer Temperatur von 50 bis 55°C verarbeitet. Die Schußzeit betrug 6 Sekunden, die Formstandzeit betrug 5 Minuten.

Die Versuchsserie wurde abgebrochen, nachdem 20 Fensterprofile problemlos ohne jegliche Verformung entformt wurden.

Beispiel 42

Herstellung eines elastischen Polyurethan-Formkörpers

A-Komponente: Mischung aus
73,77 Gew.-Teilen eines Polyoxipropylen(80 Gew.%)-polyoxyethylen-(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-Addukt,
18,28 Gew.-Teilen Ethylenglykol,
0,033 Gew.-Teilen 1,4-Diazabicyclo-(2,2,2)-octan,
0,25 Gew.-Teilen Dibutylzinndilaurat und
8,0 Gew.-Teilen Formtrennmittel IV (geschmolzen in A-Komponente eingerührt)

Komponente B:

112 Gew.-Teile einer Mischung aus mit Polyoxypropylen-glykol modifiziertem, Carbodiimidgruppen enthaltenden 4,4'-Diphenylmethandiisocyanat mit einem NCO-Gehalt von 27,5 Gew.%.

Die Komponenten (A) und (B) wurden auf 50°C erwärmt und nach dem Reaktionsspritzgußverfahren auf einer Hochdruckdosieranlage vom Type ®Puromat 30 der Elastogran-Maschinenbau in einem auf 50 bis 55°C temperierten Stahlwerkzeug mit der Raumform einer Prüfplatte (Dimension 4x60x300 mm) zu Formteilen verarbeitet.

Vor Beginn der Herstellung einer Prüfplattenserie wurde das Formwerkzeug einmalig mit einem externen Trennwachs vom Typ ®Fluoricon 36/134/2 der Firma Acmos versiegelt. Die Schußzeit betrug ungefähr 2 Sekunden und die Formstandzeit 90 Sekunden.

Nachdem 20 Prüfplatten problemlos entformt werden konnten, wurde die Versuchsserie abgebrochen.

Beispiel 43

a) Herstellung eines Ketimins aus einem Polyoxyalkylen-polyamin der Aminzahl 459 (Jeffamine® D230 der Fa. Texaco) und Methylisobutylketon

In einem 6-Liter-Dreihalskolben, ausgerüstet mit Rührer und Wasserauskreiser wurden 978 g Polyoxyalkylen-polyamin mit der Aminzahl 459 (Jeffamine D230), 2000 ml Toluol und 1022 g 4-Methyl-2-pentanon gemischt. Nach Zugabe einer Spatelspitze p-Toluolsulfonsäure wurden bei einer Badtemperatur von 145 °C innerhalb von 24 Stunden 150 ml Wasser ausgekreist. Anschließend wurden unter Normaldruck ungefähr 2/3 des verbliebenen Toluols und unter einem Druck von 0,8 mbar die restlichen flüchtigen Bestandteile abdestilliert. Man erhielt das Ketimin als klare, gelbe Flüssigkeit, die ohne zusätzliche Reinigung zur Herstellung des inneren Trennmittels eingesetzt wurde.

b) Herstellung des inneren Formtrennmittels XXI

Man verfuhr analog den Angaben des Beispiels 9b, verwendete jedoch als Aufbaukomponenten
536 g des Ketimins nach Beispiel 43a,
309 g Ölsäure,
845 g Zinkstearat,
30,4 g Natriumstearat und
30,4 g Calciumstearat.

Beispiel 44

a) Herstellung eines gemischten Ketimins aus einem Polyoxyalkylen-polyamin der Aminzahl 459 und einem Gemisch aus Cyclohexanon und 4-Methyl-2-pentanon

Analog den Angaben des Beispiels 43a wurden
1035 g Polyoxyalkylen-polyamin der Aminzahl 459 (Jeffamine D230 der Fa. Texaco),
574 g Cyclohexanon,
586 g 4-Methyl-2-pentanon und
2000 ml Toluol
gemischt. Die Mischung wurde auf eine Ölbadtemperatur von 140 bis 150 °C erwärmt und bei dieser Temperatur in 24 Stunden das Wasser ausgekreist. Das verbliebene Toluol sowie das überschüssige Cyclohexanon und 4-Methyl-2-pentanon wurden unter einem Druck von 0,5 mbar abdestilliert.

Die gemischte Ketiminverbindung, welche eine Aminzahl von 299 besaß, wurde ohne zusätzliche Reinigung zur Herstellung des inneren Trennmittels verwendet.

b) Herstellung des inneren Formtrennmittels XXII

Man verfuhr analog den Angaben des Beispiels 9b, verwendete jedoch als Aufbaukomponenten
536 g des gemischten Ketimins nach Beispiel 44a,
309 g Ölsäure,
845 g Zinkstearat,
30,4 g Natriumstearat und
30,4 g Calciumstearat.

Beispiel 45

Herstellung des inneren Trennmittels XXIII

Man verfuhr analog den Angaben des Beispiels 9b, rührte jedoch die Mischung 1 Stunde lang bei 140 °C und verwendete die folgenden Ausgangsstoffe:
459 g Ketimin, hergestellt gemäß Beispiel 43a,
265 g Ölsäure,
367 g Zinkstearat,
367 g Wismut(III)stearat,
26 g Natriumstearat und

26 g Calciumstearat.

Das hierzu verwendete Wismut(III)stearat wurde auf folgende Weise hergestellt:

Einsatzstoffe:

369,9 g technische Stearinsäure mit der Säurezahl 201 der BASF Aktiengesellschaft, die folgend Typanalyse besaß
$C_{12}$-Carbonsäure 1 Gew.%,
$C_{14}$-Carbonsäure 3 Gew.%,
$C_{15}$-Carbonsäure 0,5 Gew.%,
$C_{16}$-Carbonsäure 29 Gew.%,
$C_{17}$-Carbonsäure 1,5 Gew.%,
$C_{18}$-Carbonsäure 64 Gew.%,
$C_{20}$-Carbonsäure 1 Gew.%,
und
100,g g Wismut(III)oxid ($Bi_2O_3$).

In einem 500 ml Dreihalskolben fügte man bei 70°C zu der aufgeschmolzenen Stearinsäure unter Rühren das Wismut(III)oxid. Die Reaktionsmischung wurde zunächst 7 Stunden lang bei 110°C gerührt, wobei die Viskosität der Mischung anstieg und die Gelbfärbung zurückging, und danach bei einer Badtemperatur von 140°C das gebildete Wasser abdestilliert. Der erhaltene Rückstand wurde mittels eines auf 100°C beheizten Filters abgesaugt. Das aus Cyclohexan umkristallisierte Wismutstearat besaß einen Schmelzbereich von 82 bis 110°C.

Beispiel 46 bis 48

Die Herstellung der Polyurethan-Polyharnstoff-Formkörper und die Beurteilung der Entformungseigenschaften erfolgte nach der in den Beispielen 21 bis 39 beschriebenen Weise.

Beispiel 46

Komponente A: Mischung aus
74,65 Gew.-Teilen eines Polyoxipropylen(80 Gew.%)-polyoxiethylen-(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxipropylen-addukt,
20,00 Gew.-Teilen 3,5-Diethyl-toluylen-diamin-2,4,
0,35 Gew.-Teilen Dibutylzinndilaurat,
1 Gew.-Teil einer Lösung aus
33 Gew.% 1,4-Diazabicyclo-(2,2,2)-octan und
67 Gew.% Dipropylenglykol und
4,0 Gew.-Teilen des inneren Formtrennmittels XXI.

Komponente B:

Mischung aus mit Polyoxipropylen-glykol modifiziertem 4,4'-Diphenylmethandiisocyanat mit einem NCO-Gehalt von 26,5 Gew.%.

Die Zahl der Entformungen von aus dieser Formulierung hergestellten Formkörpern betrug mehr als 20.

Beispiel 47

Man verfuhr analog den Angaben des Beispiels 46, verwendete jedoch anstelle des inneren Formtrennmittels XXI das innere Formtrennmittel XXII.

Die Zahl der mit Formtrennmittel XXII erzielten Entformungen war weit größer als 20.

Beispiel 48

Komponente A: Mischung aus
75 Gew.-Teilen eines Polyoxipropylen(80 Gew.%)-polyoxiethylen-(20 Gew.%)-triols mit einer Hydroxylzahl

von 26, hergestellt durch Polyaddition von 1,2-Propylenoxid an Trimethylolpropan und anschließender Polyaddition von Ethylenoxid an das erhaltene Trimethylolpropan-polyoxipropylen-addukt,
20,00 Gew.-Teilen 3,5-Diethyl-toluylen-diamin-2,4,
1 Gew.-Teil einer Lösung aus
33 Gew.% 1,4-Diazabicyclo-(2,2,2)-octan und
67 Gew.% Dipropylenglykol und
4,0 Gew.-Teilen des inneren Formtrennmittels XXIII.

Komponente B:

Mischung aus mit Polyoxipropylen-glykol modifiziertem, Carbodiimidgruppen enthaltenden 4,4'-Diphenylmethan-diisocyanat mit einem NCO-Gehalt von 26,5 Gew.%.

Die Versuchsreihe wurde abgebrochen, nachdem weit mehr als 20 Formkörper problemlos entformt werden konnten.

Die Formkörper besaßen eine Wärmeformbeständigkeit nach ISO 75 Verfahren B (DIN 53 461) im ungetemperten Zustand von 91 °C und nach einstündiger Temperung bei 140 °C bzw. 180 °C von 148 °C bzw. 175 °C.

**Patentansprüche**

1. Inneres Formtrennmittel zur Herstellung von Formkörpern nach dem Polyisocyanat-polyadditionsverfahren, enthaltend
   A) mindestens ein Ketimin, Aldimin, Enamin, eine cyclische Schiff'sche Base oder eine Mischung aus mindestens zwei der genannten Verbindungen,
   B) mindestens ein Metallsalz einer organischen Carbonsäure mit 8 bis 24 Kohlenstoffatomen und
   C) gegebenenfalls mindestens eine organische Carbonsäure, organische Sulfonsäure, Mineralsäure oder Amidosulfonsäure.

2. Inneres Formtrennmittel zur Herstellung von Formkörpern nach dem Polyisocyanat-polyadditionsverfahren, bestehend aus
   A) 5 bis 90 Gew.-Teilen mindestens eines Ketimins, Aldimins, Enamins, einer cyclischen Schiff'schen Base oder einer Mischung aus mindestens zwei der genannten Verbindungen,
   B) 10 bis 95 Gew.-Teilen mindestens eines Metallsalzes einer organischen Carbonsäure mit 8 bis 24 Kohlenstoffatomen und
   C) 0 bis 50 Gew.-Teilen mindestens einer organischen Carbonsäure, organischen Sulfonsäure, Mineralsäure oder Amidosulfonsäure, bezogen auf 100 Gew.-Teile der Aufbaukomponenten (A) und (B).

3. Inneres Formtrennmittel nach den Ansprüchen 1 oder 2, dadurch gekennzeichnet, daß die Ketimine und/oder Aldimine (A) hergestellt werden durch Umsetzung von
   gegebenenfalls substituierten aliphatischen, cycloaliphatischen, heterocyclischen und/oder aromatischen primären Monoaminen mit 1 bis 20 Kohlenstoffatomen und/oder primären Polyaminen mit 2 bis 20 Kohlenstoffatomen,
   gegebenenfalls substituierten aliphatischen, cycloaliphatischen, heterocyclischen und/oder aromatischen primären Mono- und/oder Polyaminen, die zusätzlich sekundäre und/oder tertiäre Aminogruppen und/oder heterocyclische Reste und/oder Hydroxylgruppen und/oder Ethergruppen gebunden enthalten,
   linearen, verzweigten oder cyclischen Alkanolaminen mit 2 bis 22 Kohlenstoffatomen und/oder
   Polyoxialkylen-polyaminen mit Molekulargewichten von 204 bis 5000 mit
   aromatischen, aliphatisch-aromatischen, cycloaliphatischen oder aliphatischen Ketonen und/oder Diketonen oder gegebenenfalls substituierten aliphatischen und/oder aromatischen Aldehyden, Dialdehyden und/oder Acetalen.

4. Inneres Formtrennmittel nach den Ansprüchen 1 oder 2, dadurch gekennzeichnet, daß die Enamine und/oder Polyenamine (A) hergestellt werden durch Umsetzung von gegebenenfalls substituierten aliphatischen, cycloaliphatischen, heterocyclischen und/oder aromatischen sekundären Mono- und/oder Polyaminen mit aliphatischen Aldehyden oder cycloaliphatischen Ketonen.

5. Inneres Formtrennmittel nach den Ansprüchen 1 oder 2, dadurch gekennzeichnet, daß als cyclische

Schiff'sche Basen 2-Methyl-piperidin-$\Delta^1$ und/oder 3,4-Dihydroisochinolin eingesetzt werden.

6. Inneres Formtrennmittel nach den Ansprüchen 1 oder 2, dadurch gekennzeichnet, daß das Aldimin oder vorzugsweise Ketimin (A) ein enolisierbares Wasserstoffatom gebunden hat.

7. Inneres Formtrennmittel nach den Ansprüchen 1 oder 2, dadurch gekennzeichnet, daß die Metalle der Metallsalze (B) zu der Gruppe IA, IB, IIA oder IIB des Periodensystems gehören oder Aluminium, Chrom, Molybdän, Eisen, Kobalt, Nickel, Zinn, Blei, Antimon oder Wismut sind.

8. Inneres Formtrennmittel nach den Ansprüchen 1 oder 2, dadurch gekennzeichnet, daß man als Metallsalze (B) mindestens ein Metallsalz der Stearin- und/oder Isostearinsäure, vorzugsweise Zinkstearat, Zinkisostearat, Calciumstearat, Natriumstearat oder eine Mischung aus mindestens zwei der genannten Stearate verwendet.

9. Inneres Formtrennmittel nach den Ansprüchen 1 oder 2, dadurch gekennzeichnet, daß als organische Carbonsäuren (C) verwendet werden: aliphatische Monocarbonsäuren mit 1 bis 20 Kohlenstoffatomen, aliphatische Dicarbonsäuren mit 2 bis 36 Kohlenstoffatomen oder deren Anhydride,
aromatische Monocarbonsäuren mit 7 bis 12 Kohlenstoffatomen und/oder aromatische Dicarbonsäuren mit 8 bis 17 Kohlenstoffatomen oder deren Anhydride.

10. Verwendung der inneren Formtrennmittel nach den Ansprüchen 1 oder 2 zur Herstellung von kompakten Formkörpern, zelligen Formkörpern oder Formkörpern mit einem zelligen Kern und einer kompakten Randzone nach dem Polyisocyanat-polyadditionsverfahren, vorzugsweise mittels der Reaktionsspritzguß(RIM)-Technik.

11. Verfahren zur Herstellung von zelligen oder kompakten Formkörpern oder Formkörpern mit einem zelligen Kern und einer kompakten Randzone mit verbesserten Entformungseigenschaften nach dem Polyisocyanat-polyadditionsverfahren, vorzugsweise mittels der Reaktionsspritzguß(RIM)-Technik, durch Umsetzung von
   a) organischen Polyisocyanaten,
   b) höhermolekularen Verbindungen mit mindestens zwei reaktiven Wasserstoffatomen,
   c) Kettenverlängerungsmitteln und/oder Vernetzern
   in Gegenwart von
   d) inneren Formtrennmitteln,
   e) Katalysatoren und gegebenenfalls
   f) Treibmitteln, g) Hilfsmitteln und/oder Zusatzstoffen
   in offenen oder vorzugsweise geschlossenen Formwerkzeugen, dadurch gekennzeichnet, daß man als inneres Formtrennmittel (e) eine Mischung verwendet, bestehend aus
   A) 5 bis 90 Gew.-Teilen mindestens eines Ketimins, Aldimins, Enamins, einer cyclischen Schiff'schen Base oder einer Mischung aus mindestens zwei der genannten Verbindungen,.
   B) 10 bis 95 Gew.-Teilen mindestens eines Metallsalzes einer organischen Carbonsäure mit 8 bis 24 Kohlenstoffatomen und
   C) 0 bis 50 Gew.-Teilen mindestens einer organischen Carbonsäure, organischen Sulfonsäure, Mineralsäure oder Amidosulfonsäure, bezogen auf 100 Gew.-Teile der Aufbaukomponenten (A) und (B).

12. Verfahren nach Anspruch 11, dadurch gekennzeichnet, daß man das innere Formtrennmittel (e) in einer Menge von 0,1 bis 15 Gew.-Teilen, bezogen auf 100 Gew.-Teile der Aufbaukomponenten (b) und (c) verwendet.

13. Verfahren nach Anspruch 11, dadurch gekennzeichnet, daß die zelligen Formkörper eine Dichte von 0,3 bis 1,1 g/cm$^3$, die Formkörper mit einem zelligen Kern und einer kompakten Randzone eine Gesamtdichte von 0,05 bis 1,2 g/cm$^3$ und die kompakten Formkörper eine Dichte von 0,9 bis 1,4 g/cm$^3$ besitzen und bestehen aus Polyurethan-, Polyharnstoff-, Polyurethan-Polyharnstoff-, Polyurethan-Polyharnstoff-Polyamid- oder Polyharnstoff-Polyamid-Kunststoffen.

**Claims**

1. An internal mold release agent for the production of moldings by the polyisocyanate polyaddition process, comprising
A) at least one ketimine, aldimine, enamine or cyclic Schiff base or a mixture of at least two of said compounds,
B) at least one metal salt of an organic carboxylic acid having from 8 to 24 carbon atoms and
C) if desired at least one organic carboxylic acid, organic sulfonic acid, mineral acid or amidosulfonic acid.

2. An internal mold release agent for the production of moldings by the polyisocyanate polyaddition process, comprising
A) from 5 to 90 parts by weight of at least one ketimine, aldimine, enamine or cyclic Schiff base or a mixture of at least two of said compounds,
B) from 10 to 95 parts by weight of at least one metal salt of an organic carboxylic acid having from 8 to 24 carbon atoms and
C) from 0 to 50 parts by weight of at least one organic carboxylic acid, organic sulfonic acid, mineral acid or amidosulfonic acid, based on 100 parts by weight of mixture components (A) and (B).

3. An internal mold release agent as claimed in claim 1 or 2, wherein the ketimine and/or aldimine (A) is prepared by reacting a substituted or unsubstituted aliphatic, cycloaliphatic, heterocyclic and/or aromatic primary monoamine having from 1 to 20 carbon atoms and/or primary polyamine having from 2 to 20 carbon atoms, a substituted or unsubstituted aliphatic, cycloaliphatic, heterocyclic and/or aromatic primary monoamine and/or polyamine which additionally contains bonded secondary and/or tertiary amino groups and/or heterocyclic radicals and/or hydroxyl groups and/or ether groups,
a linear, branched or cyclic alkanolamine having from 2 to 22 carbon atoms and/or
a polyoxyalkylene-polyamine having a molecular weight of from 204 to 5000
with
an aromatic, aliphatic-aromatic, cycloaliphatic or aliphatic ketone and/or diketone or a substituted or unsubstituted aliphatic and/or aromatic aldehyde, dialdehyde and/or acetal.

4. An internal mold release agent as claimed in claim 1 or 2, wherein the enamine and/or polyenamine (A) is prepared by reacting a substituted or unsubstituted aliphatic, cycloaliphatic, heterocyclic and/or aromatic secondary monoamine and/or polyamine with an aliphatic aldehyde or cycloaliphatic ketone.

5. An internal mold release agent according to claim 1 or 2, wherein the cyclic Schiff base employed is 2-methyl-$\Delta^1$-piperidine and/or 3,4-dihydroisoquinoline.

6. An internal mold release agent as claimed in claim 1 or 2, wherein the aldimine or preferably ketimine (A) contains a bonded enolizable hydrogen atom.

7. An internal mold release agent as claimed in claim 1 or 2, wherein the metal of the metal salt (B) belongs to group IA, IB, IIA or IIB of the Periodic Table or is aluminum, chromium, molybdenum, iron, cobalt, nickel, tin, lead, antimony or bismuth.

8. An internal mold release agent as claimed in claim 1 or 2, wherein the metal salt (B) used is at least one metal salt of stearic acid and/or isostearic acid, preferably zinc stearate, zinc isostearate, calcium stearate, sodium stearate or a mixture of at least two of said stearates.

9. An internal mold release agent as claimed in claim 1 or 2, wherein the organic carboxylic acid (C) used is an aliphatic monocarboxylic acid having from 1 to 20 carbon atoms,
an aliphatic dicarboxylic acid having from 2 to 36 carbon atoms or an anhydride thereof,
an aromatic monocarboxylic acid having from 7 to 12 carbon atoms and/or
an aromatic dicarboxylic acid having from 8 to 17 carbon atoms or an anhydride thereof.

10. The use of an internal mold release agent as claimed in claim 1 or 2 for the production of compact moldings, cellular moldings or moldings having a cellular core and a compact peripheral zone by the polyisocyanate polyaddition process, preferably by reaction injection molding (RIM).

11. A process for the production of cellular or compact moldings or moldings having a cellular core and a

compact peripheral zone and having improved demolding properties by the polyisocyanate polyaddition process, preferably by reaction injection molding (RIM), by reacting

a) an organic polyisocyanate,
b) a relatively high-molecular-weight compound containing at least two reactive hydrogen atoms,
c) a chain extender and/or cross linking agent
in the presence of
d) an internal mold release agent,
e) a catalyst and, if desired,
f) a blowing agent,
g) assistants and/or additives,
in an open or preferably closed mold, which comprises using as internal mold release agent (e) a mixture comprising
A) from 5 to 90 parts by weight of at least one ketimine, aldimine, enamine or cyclic Schiff base or a mixture of at least two of said compounds,
B) from 10 to 95 parts by weight of at least one metal salt of an organic carboxylic acid having from 8 to 24 carbon atoms and
C) from 0 to 50 parts by weight of at least one organic carboxylic acid, organic sulfonic acid, mineral acid or amidosulfonic acid, based on 100 parts by weight of mixture components (A) and (B).

**12.** A process as claimed in claim 11, wherein the internal mold release agent (e) is used in an amount of from 0.1 to 15 parts by weight, based on 100 parts by weight of the mixture components (b) and (c).

**13.** A process as claimed in claim 11, wherein the cellular moldings have a density of from 0.3 to 1.1 g/cm$^3$, the moldings having a cellular core and a compact peripheral zone have an overall density of from 0.05 to 1.2 g/cm$^3$, and the compact moldings have a density of from 0.9 to 1.4 g/cm$^3$, and comprise polyurethane, polyurea, polyurethane-polyurea, polyurethane-polyurea-polyamide or polyurea-polyamide plastics.

## Revendications

**1.** Agent de démoulage interne pour la fabrication de corps moulés par le procédé de polyaddition des polyisocyanates, contenant :

A) au moins une cétimine, une aldimine, une énamine, une base de Schiff cyclique ou un mélange d'au moins deux de ces composés,
B) au moins un sel métallique d'un acide organique carboxylique en C 8-C 24, et
C) le cas échéant au moins un acide organique carboxylique, un acide organique sulfonique, un acide minéral ou l'acide amidosulfonique.

**2.** Agent de démoulage interne pour la fabrication de corps moulés par le procédé de polyaddition des polyisocyanates, consistant en :

A) 5 à 90 parties en poids d'au moins une cétimine, une aldimine, une énamine, une base de Schiff cyclique ou d'un mélange d'au moins deux de ces composés,
B) 10 à 95 parties en poids d'au moins un sel métallique d'un acide organique carboxylique en C 8-C 24, et
C) 0 à 50 parties en poids d'au moins un acide organique carboxylique, un acide organique sulfonique, un acide minéral ou l'acide amidosulfonique, pour 100 parties en poids des composants A) et B).

**3.** Agent de démoulage interne selon les revendications 1 ou 2, caractérisé en ce que les cétimines et/ou aldimines A) sont préparées par réaction de :

des monoamines primaires en C 1-C 20 et/ou polyamines primaires en C 2-C 20 aliphatiques, cycloaliphatiques, hétérocycliques et/ou aromatiques, éventuellement substituées,
des mono- et/ou poly-amines primaires aliphatiques, cycloaliphatiques, hétérocycliques et/ou aromatiques éventuellement substituées qui contiennent en outre des groupes amino secondaires et/ou tertiaires et/ou des radicaux hétérocycliques et/ou des groupes hydroxy et/ou des groupes éther,
des alcanolamines linéaires, ramifiées ou cyliques en C 2-C 22 et/ou des polyoxyalkylène-polyamines de poids moléculaire 204 à 5000, avec

des cétones et/ou dicétones aromatiques, aliphatiques-aromatiques, cycloaliphatiques ou aliphatiques ou des aldéhydes, dialdéhydes et/ou acétals aliphatiques et/ou aromatiques éventuellement substitués.

**4.** Agent de démoulage interne selon les revendications 1 ou 2, caractérisé en ce que les énamines et/ou polyèneamines A) sont préparées par réaction de mono- et/ou poly-amines aliphatiques, cycloaliphatiques, hétérocycliques et/ou aromatiques secondaires éventuellement substituées avec des aldéhydes aliphatiques ou des cétones cycloaliphatiques.

**5.** Agent de démoulage interne selon les revendications 1 ou 2, caractérisé en ce que l'on utilise en tant que bases de Schiff cycliques la 2-méthyl-pipéridine- $\Delta^1$ et/ou la 3,4-dihydroisoquinoléine.

**6.** Agent de démoulage interne selon les revendications 1 ou 2, caractérisé en ce que l'aldimine ou, de préférence, la cétimine A) porte un atome d'hydrogène énolisable.

**7.** Agent de démoulage interne selon les revendications 1 ou 2, caractérisé en ce que les métaux des sels métalliques B) appartiennent au groupe IA, Ia, IIA ou IIB de la Classification Périodique ou consistent en l'aluminium, le chrome, le molybdène, le fer, le cobalt, le nickel, l'étain, le plomb, l'antimoine ou le bismuth.

**8.** Agent de démoulage interne selon les revendications 1 ou 2, caractérisé en ce que les sels métalliques B) consistent en au moins un sel métallique de l'acide stéarique et/ou isostéarique, de préférence le stéarate de zinc, l'isostéarate de zinc, le stéarate de calcium, le stéarate de sodium ou un mélange d'au moins deux de ces stéarates.

**9.** Agent de démoulage interne selon les revendications 1 ou 2, caractérisé en ce que les acides organiques carboxyliques C) consistent en acides monocarboxyliques aliphatiques en C 1-C 20, en acides dicarboxyliques aliphatiques en C 2-C 36 ou en leurs anhydrides, en acides monocarboxyliques aromatiques en C 7-C 12 et/ou en acides dicarboxyliques aromatiques en C 8-C 17 ou en leurs anhydrides.

**10.** Utilisation des agents de démoulage internes selon les revendications 1 ou 2 pour la fabrication de corps moulés compacts, de corps moulés alvéolaires ou de corps moulés ayant un noyau alvéolaire et une zone de bordure compacte par le procédé de polyaddition des polyisocyanates, de préférence par la technique de moulage réactif par injection (RIM).

**11.** Procédé de préparation de corps moulés alvéolaires ou compacts ou de corps moulés ayant un noyau alvéolaire et une zone de bordure compacte, à propriétés améliorées de démoulage, par le procédé de polyaddition des polyisocyanates, de préférence par la technique de moulage réactif par injection (RIM) par réaction de :

a) des polyisocyanates organiques,
b) des composés à haut poids moléculaire contenant au moins 2 atomes d'hydrogène réactifs,
c) des agents d'allongement des chaînes et/ou agents réticulants, en présence de
d) des agents de démoulage internes,
e) des catalyseurs et le cas échéant
f) des agents gonflants,
g) des produits auxiliaires et/ou additifs,

dans des outils de moulage ouverts ou de préférence fermés, caractérisé en ce que l'on utilise en tant qu'agent de démoulage interne e) un mélange consistant en

A) 5 à 90 parties en poids d'au moins une cétimine, une aldimine, une énamine, une base de Schiff cyclique et d'un mélange d'au moins deux de ces composés,
B) 10 à 95 parties en poids d'au moins un sel métallique d'un acide organique carboxylique en C 8-C 24, et
C) 0 à 50 parties en poids d'un acide organique carboxylique, d'un acide organique sulfonique, d'un acide minéral ou d'acide amidosulfonique, pour 100 parties en poids des composants A) et B).

12. Procédé selon la revendication 11, caractérisé en ce que l'on utilise l'agent de démoulage interne e) en quantité de 0,1 à 15 parties en poids pour 100 parties en poids des composants b) et c).

13. Procédé selon la revendication 11, caractérisé en ce que les corps moulés alvéolaires ont une densité de 0,3 à 1,1 g/$cm^3$, les corps moulés à noyau alvéolaire et zone de bordure compacte ont une densité globale de 0,05 à 1,2 g/$cm^3$ et les corps moulés compacts une densité de 0,9 à 1,4 g/$cm^3$, et consistent en résines synthétiques de polyuréthannes, de polyurées, de polyuréthanne-polyurées, de polyuréthanne-polyurée-polyamides ou de polyurée-polyamides.